# EUROPEAN PATENT APPLICATION

(11) **EP 2 722 166 A1**
(43) Date of publication of application: **23.04.2014**
(21) Application number: 12397527.8
(22) Date of filing: 22.10.2012
(51) Int. Cl.: B32B 3/06, B32B 7/12, B32B 21/04, B32B 21/08

(54) **A panel comprising fixing means**

(71) Applicant: UPM-Kymmene Wood Oy, 15140 Lahti (FI)
(72) Inventor: Tilli, Mikko, 15870 Hollola (FI)
(74) Representative: Pursiainen, Timo Pekka

(57) **Abstract**

A panel comprising a first surface and a second surface, a surface layer, wherein the surface layer comprises the first surface, at least two layers, wherein at least one of the at least two layers comprise wood, and adhesive material in between the at least two layers. The panel further comprises a fixing means, wherein the fixing means is arranged at least partly in the panel such that the fixing means is covered on at least a first side of the panel with (i) the surface layer and (ii) optionally another surface layer, whereby the fixing means is concealed be the surface layer. A vehicle comprising such a panel. A piece of furniture comprising such a panel. Use of such a panel in concrete forming. A method for manufacturing such a panel.

## Description

### Field of the Invention

The invention relates to a panel comprising a fixing means. The panel may be used e.g. in a vehicle, in a piece of furniture, in a lighting device, or in concrete forming. The invention further relates to a method for producing the panel.

### Background of the Invention

Panels are used widely in construction, in vehicles, in furniture and in lighting devices. Often the panels are fixed to objects. E.g. a panel may be fixed to a body, such as a frame, of a vehicle. In furniture, another panel may form part of a seat, whereby other parts of the seat may be fixed to the panel. In lighting devices, a panel may form the support from which the rest of the lighting device is suspended. The panel may be fixed to a roof. Furthermore, in concrete forming, a panel may be fixed to a support structure to enable a desired shape for the formed concrete structure.

Panels are commonly fixed to other objects by using fixing means that penetrate through the hole panel, such as nails or screws. However, such fixing means are not always visually attractive. Moreover, via a channel in between the fixing means and the panel, moisture can penetrate into the panel. This reduces the service life of the panel. In this way, moisture induced swelling may occur, which deteriorate the fixing of the panel. Still further, such a fixing means may protrude from the panel, which has to be taken into account when loading cargo onto such panel.

### Summary of the Invention

A panel comprising concealed fixing means is disclosed. Such a panel is
- fixable to another object using the fixing means,
- visually attractive, since the fixing means is concealed, and
- resistant to environment, because of a concealing surface layer.

A panel of an embodiment comprises:
- a first surface and a second surface,
- a surface layer, wherein the surface layer comprises the first surface,
- at least two layers, wherein at least one of the at least two layers comprise wood,
- adhesive material in between the at least two layers, and
- a fixing means, wherein
- the fixing means is arranged at least partly in the panel such that
- the fixing means is covered on at least a first side of the panel with (i) the surface layer and (ii) optionally another surface layer,
   whereby the fixing means is concealed be the surface layer.

An embodiment comprises a surface construction, wherein the surface construction comprises the surface layer, and
- the surface construction is water-proof or humid-proof,
   to protect the at least two layers from moisture.

These and other features of the panel are disclosed in the appended examples 1 to 42. The panel can be arranged as a part of a first structure or of a second structure. Features of such a first structure are disclosed in appended examples 43 and 44. Features of such a second structure are disclosed in appended example 45. The panel can be used in a vehicle. Features of such a vehicle are disclosed in appended examples 46 to 52. The panel can be used as part of furniture. Features of such a part of furniture are disclosed in appended examples 53 to 57.

Such a panel can be used in concrete forming, as disclosed in the examples 57 to 61.

In addition, a method for manufacturing a panel is disclosed. The method comprises
- arranging available a preform for the panel, the preform comprising at least two layers and adhesive material in between the two layers, wherein at least one of the layers comprise wood, whereby the preform comprises a first surface and a second surface,
- machining a mounting hole for a fixing means into the preform for the panel,
- arranging a fixing means at least partly into the mounting hole, and
- (i) arranging a surface construction or (ii) machining the mounting hole such that a part of the preform forms a surface construction, such that
- the fixing means is covered with the surface construction.

These and other feature of the method are disclosed in the appended examples 62 to 74.

### Description of the Drawings

- Figure 1a: shows, in a perspective view, a preform for a panel,
- Figure 1b: shows, in a side view, the preform of Fig. 1 a,
- Figure 1c: shows, in a side view, a vehicle comprising panels,
- Figure 2a: shows, in a side view, parts of a panel comprising fixing means,
- Figure 2b: shows, in a side view, a panel comprising fixing means,
- Figure 2c: shows, in a side view, the panel of Fig. 2b fixed to a body of a vehicle,
- Figure 2d: shows, in a side view, two panels fixed to a frame of a vehicle,
- Figure 2e: shows the part Ile of Fig. 2d in more detail,
- Figure 2f: shows in a side view, two panels fixed to a frame of a vehicle,
- Figure 3a: shows, in a side view, a panel comprising fixing means,
- Figure 3b: shows, in a side view, a panel comprising fixing means,
- Figure 4a1: shows, in a side view, a fixing means of a panel,
- Figure 4b1: shows, in a side view, a fixing means of a panel,
- Figure 4c1: shows, in a side view, a fixing means of a panel,

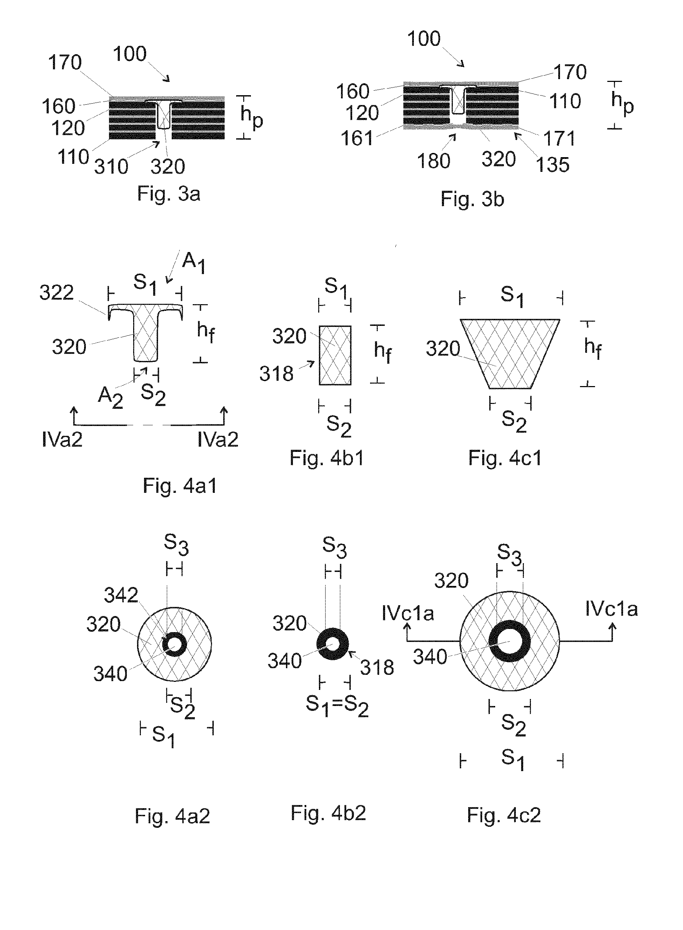

- Figure 4a2: shows, in a bottom view, i.e. the end view from the plane IVa2-IVa2 of Fig. 4a1, the fixing means of Fig. 4a1,

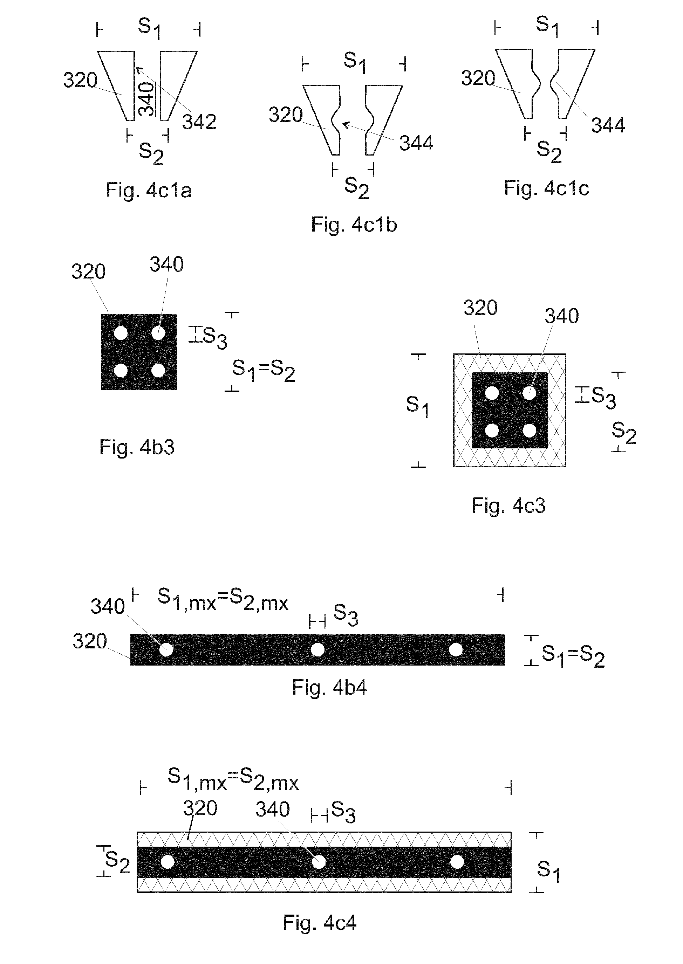

- Figure 4b2: shows, in a bottom view, a fixing means of a panel, wherein the fixing means may have the side view shown in Fig. 4b1,
- Figure 4c2: shows, in a bottom, a fixing means of a panel, wherein the fixing means may have the side view shown in Fig. 4c1,
- Figure 4c1a: shows a cross section of a fixing means of a panel, the cross section taken along the line IVc1 a-IVc1 a of Fig. 4c2,
- Figure 4c1b: shows a cross section of a fixing means of a panel, the cross section taken along the line IVc1 a-IVc1 a of Fig. 4c2,
- Figure 4c1c: shows a cross section of a fixing means of a panel, the cross section taken along the line IVc1a-IVc1a of Fig. 4c2,
- Figure 4b3: shows, in a bottom view, a fixing means of a panel, wherein the fixing means may have the side view shown in Fig. 4b1,
- Figure 4c3: shows, in a bottom, a fixing means of a panel, wherein the fixing means may have the side view shown in Fig. 4c1,
- Figure 4b4: shows, in a bottom, a fixing means of a panel, wherein the fixing means may have the side view shown in Fig. 4b1,
- Figure 4c4: shows, in a bottom, a fixing means of a panel, wherein the fixing means may have the side view shown in Fig. 4c1,

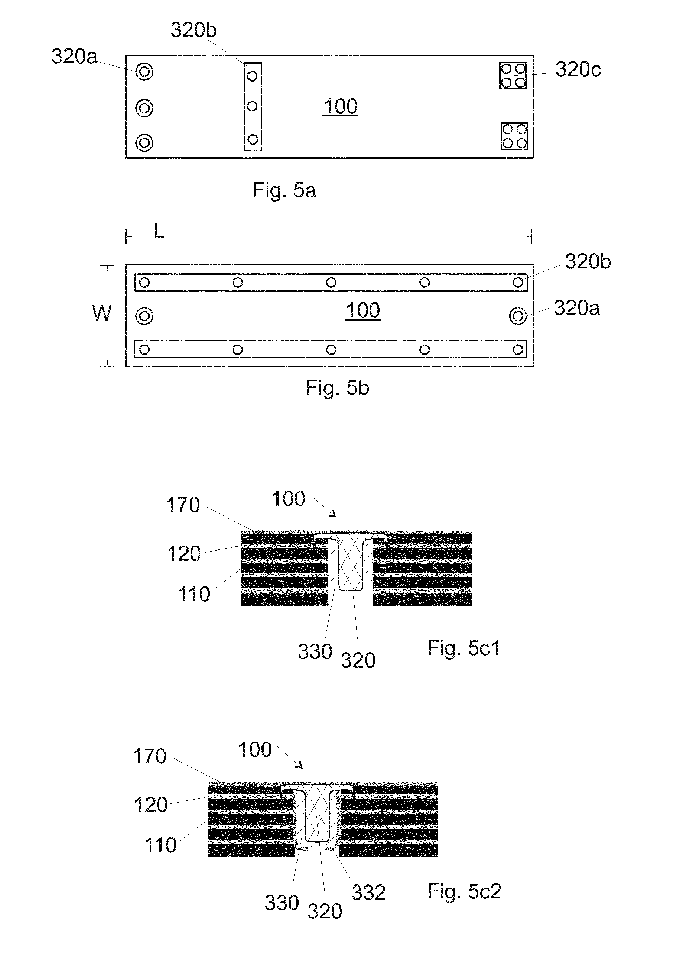

- Figure 5a: shows, in a bottom view, a panel comprising fixing means,
- Figure 5b: shows, in a bottom view, a panel comprising fixing means only on its border area,
- Figure 5c1: shows, in a side view, a part of a panel comprising fixing means,
- Figure 5c2: shows, in a side view, a part of a panel comprising fixing means,

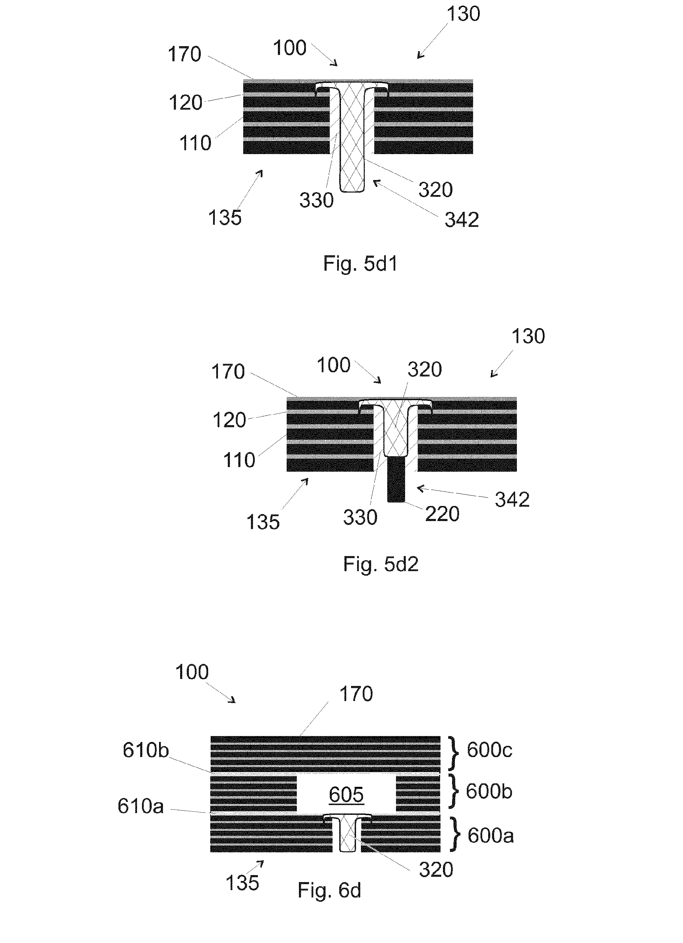

- Figure 5d1: shows, in a side view, a part of a panel comprising fixing means,
- Figure 5d2: shows, in a side view, a part of a panel comprising fixing means,

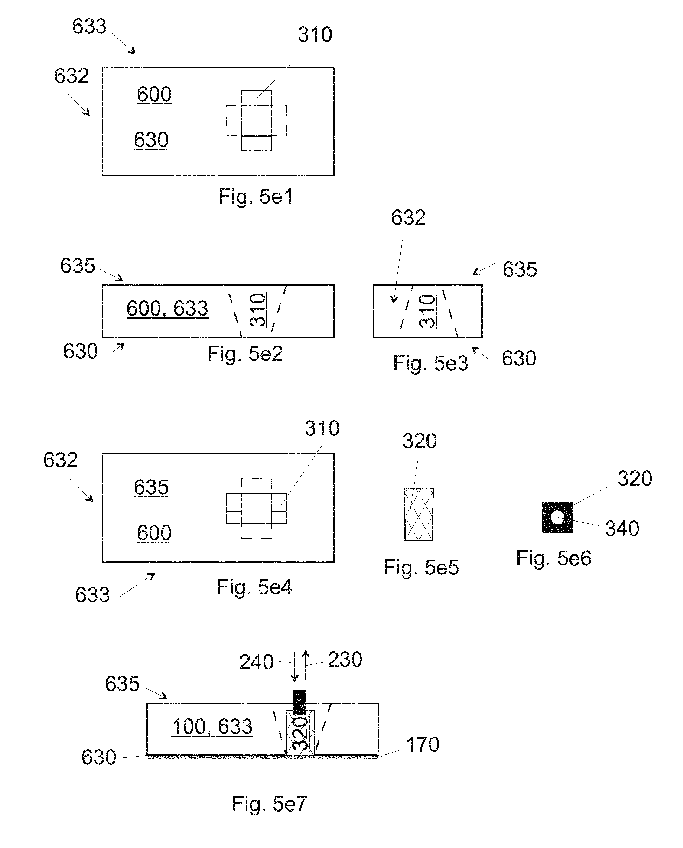

- Figure 5e1: shows, in a top view, a preform for a panel,
- Figure 5e2: shows, in a side view, the preform of Fig. 5e1,
- Figure 5e3: shows, in another side view, the preform of Fig. 5e1,
- Figure 5e4: shows, in a bottom view, the preform of Fig. 5e1,
- Figure 5e5: shows, in side view, a fixing means for the preform of Fig. 5e1,
- Figure 5e6: shows, in a bottom view, the fixing means of Fig. 5e5,
- Figure 5e7: shows, in a side view, a panel made using the preform of Figs.5e1 to 5e4 and the fixing means of Figs. 5e5 and 5e6,

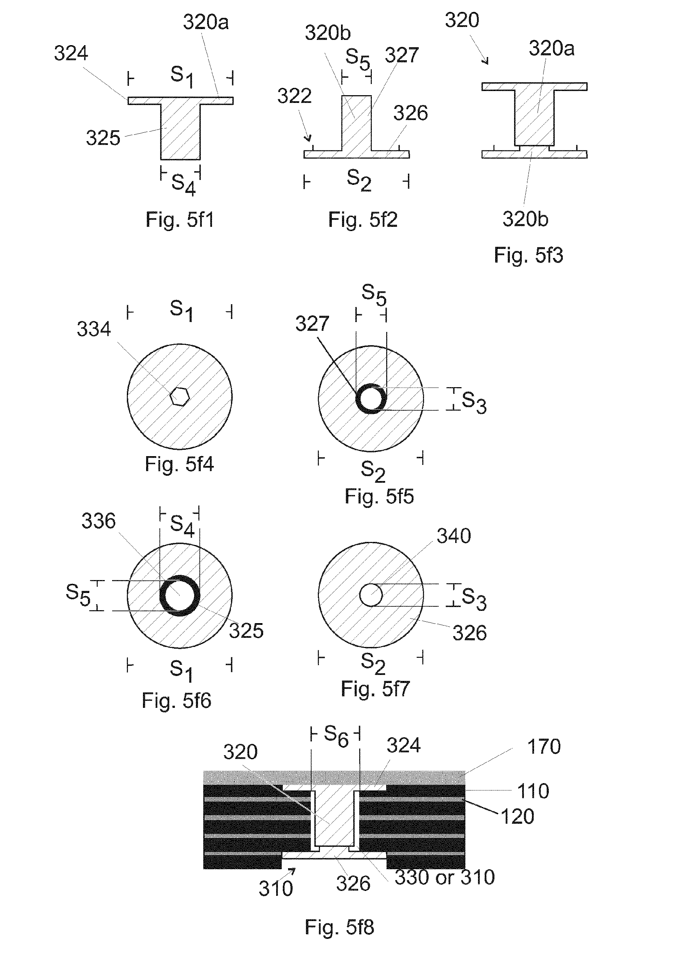

- Figure 5f1: shows, in a side view, a first part of a fixing means,
- Figure 5f2: shows, in a side view, a second part of a fixing means,
- Figure 5f3: shows, in a side view, a fixing means comprising the first part of Fig. 5f1 and the second part of Fig. 5f2,
- Figure 5f4: shows, in an end view (top), the first part of the fixing means of Fig. 5f1,
- Figure 5f5: shows, in an end view (top), the second part of the fixing means of Fig. 5f2,
- Figure 5f6: shows, in an end view (bottom), the first part of the fixing means of Fig. 5f1,
- Figure 5f7: shows, in an end view (bottom), the second part of the fixing means of Fig. 5f2,
- Figure 5f8: shows, in a side view, a panel comprising the fixing means of Fig. 5f3,

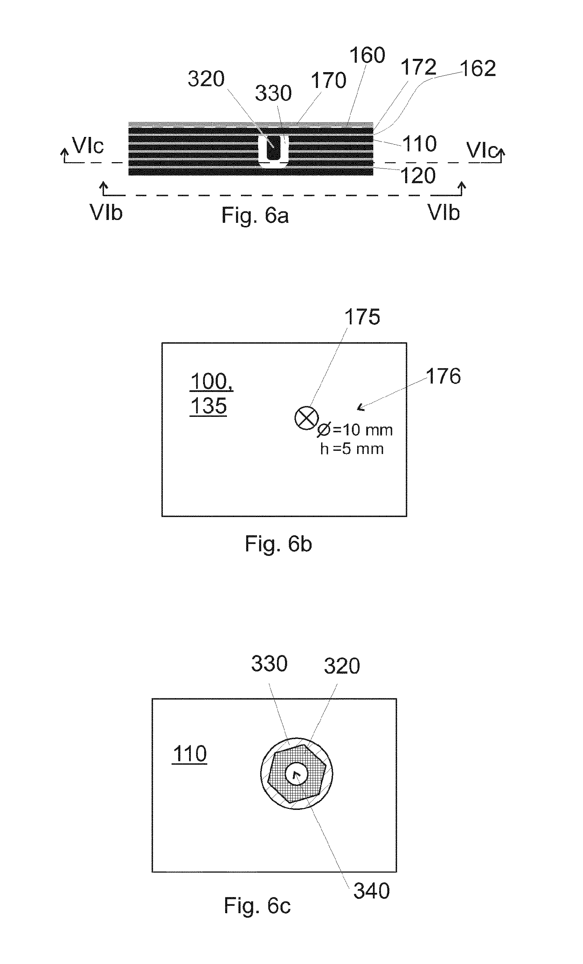

- Figure 6a: shows, in a side view, a panel comprising fixing means,
- Figure 6b: shows, in a bottom view, i.e. in the view Vlb-Vlb of Fig 6a , the panel of Fig. 6a and markings indicative of the fixing means
- Figure 6c: shows, in the cross sectional view Vlc-Vlc of Fig 6a, the panel of Fig. 6a,
- Figure 6d: shows, in a side view, a panel comprising fixing means and three preforms,

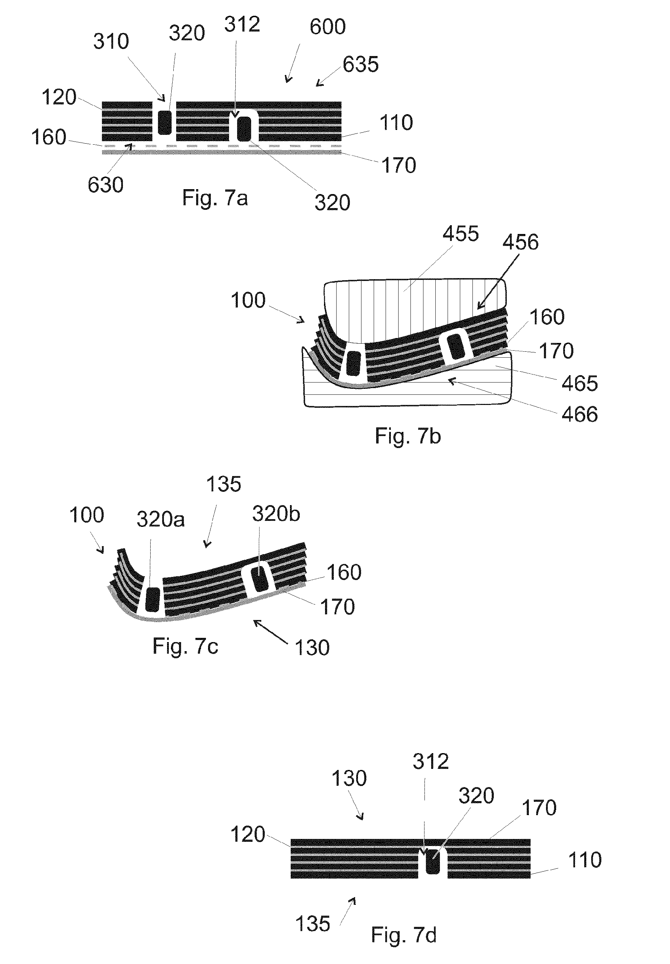

- Figure 7a: shows, in a side view, parts of a panel comprising fixing means,
- Figure 7b: shows, in a side view, form pressing a panel,
- Figure 7c: shows, in a side view, a from pressed panel comprising fixing means,
- Figure 7d: shows, in a side view, a panel comprising fixing means,

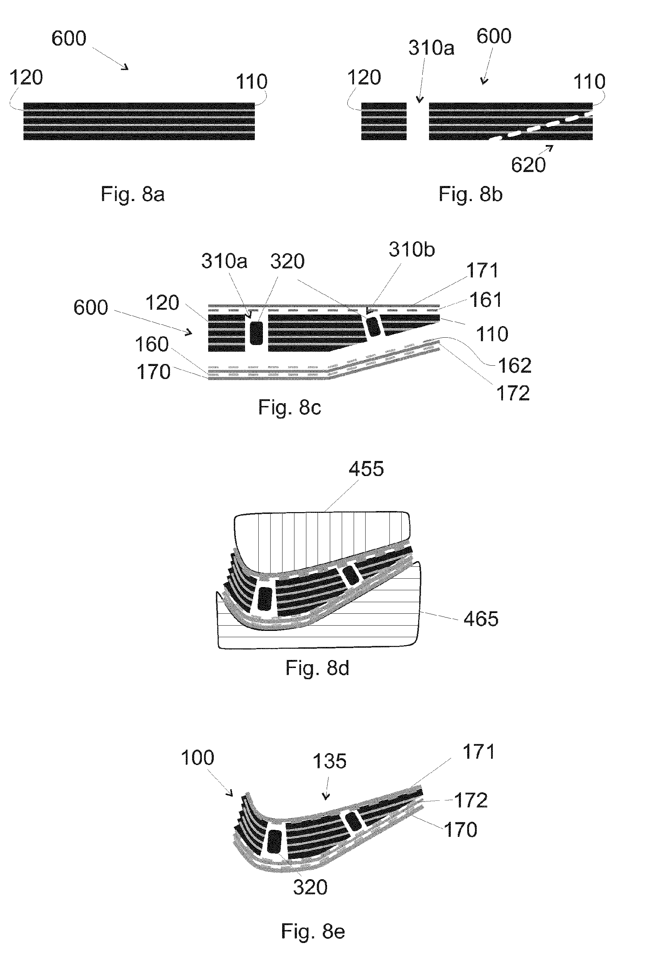

- Figure 8a: shows, in a side view, a preform for a panel,
- Figure 8b: shows, in a side view, machining a hole to the preform,
- Figure 8c: shows, in a side view, machining the preform for Fig. 8b to a preform having a non-uniform thickness, and inserting fixing means to the holes,
- Figure 8d: shows, in a side view, form pressing the panel of Fig. 8c and simultaneously attaching surface layers to the preform to form the panel,
- Figure 8e: shows, in a side view, a form pressed panel,

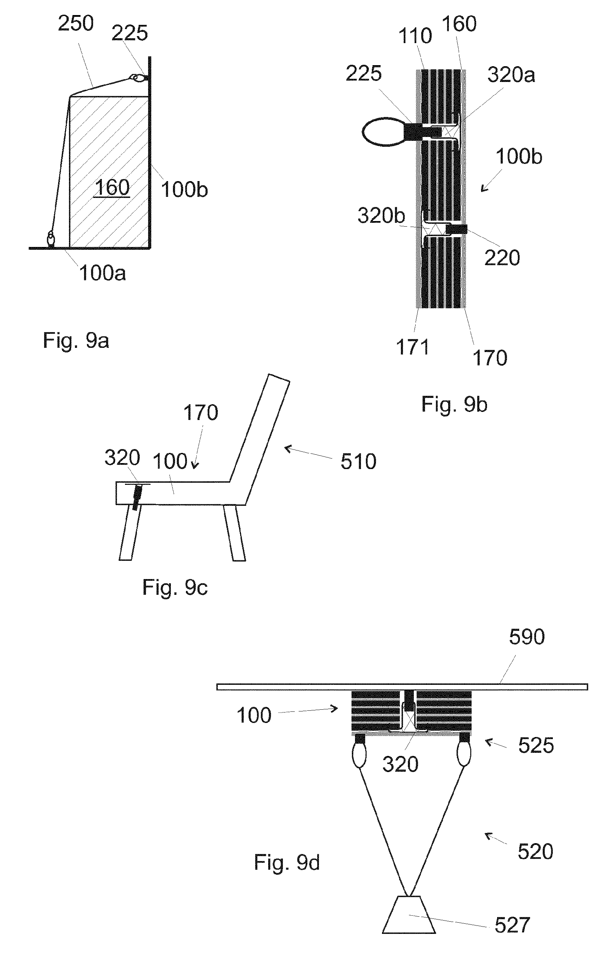

- Figure 9a: shows using a panel as a wall of a vehicle,
- Figure 9b: shows using a panel as a wall element,
- Figure 9c: shows using a panel in a seat,
- Figure 9d: shows using a panel in a lighting device,

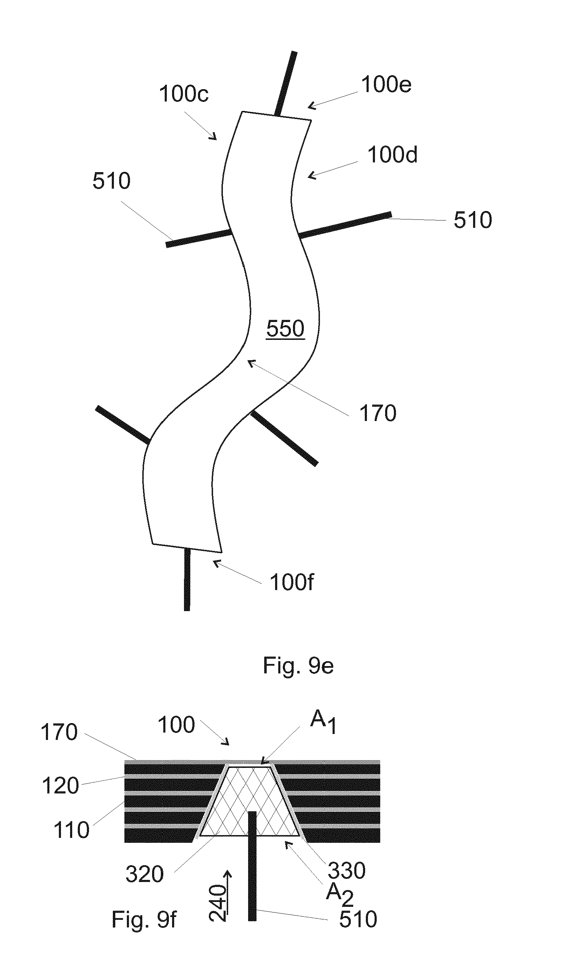

- Figure 9e: shows using a panel in concrete forming, and
- Figure 9f: shows a panel comprising fixing means.

### Detailed Description of the Invention

A purpose of the present invention is to provide a method by which a panel that has concealed fixing means can efficiently be manufactured. A further purpose of the invention is to present a panel with concealed fixing means. As the fixing means is concealed, the surface is visually attractive. Moreover, by choosing the surface material properly, moistening of the panel may be hindered.

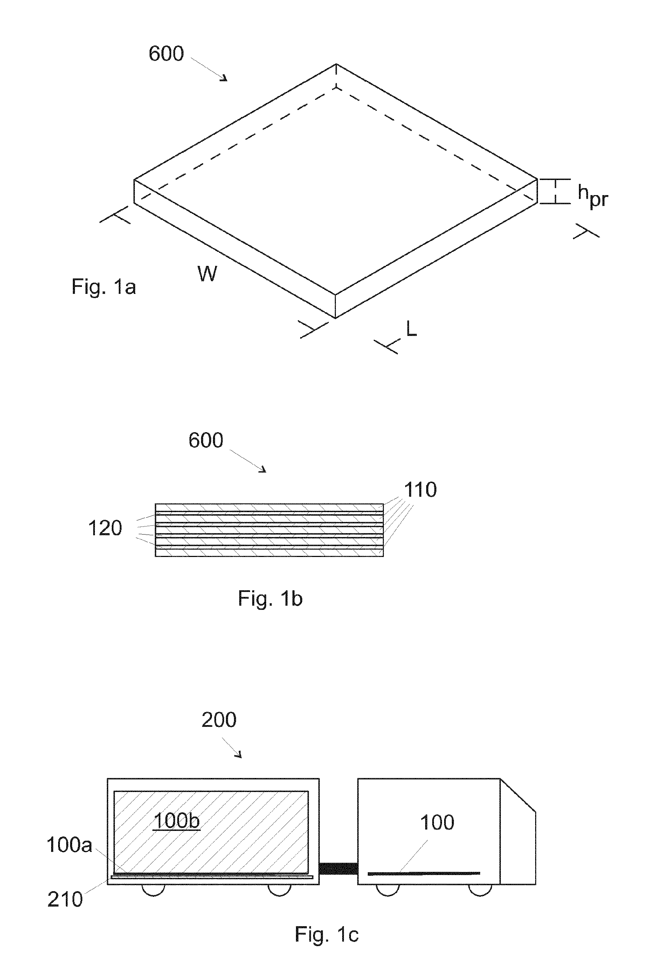

A panel 100 may be manufactured from a preform 600 for a panel. Figure 1 a shows, in a perspective view, a preform 600 for a panel. The preform has a thickness hₚᵣ, width W, and a length L. The measures of the preform 600 may be chosen according to the designed used of the panel. The thickness hₚᵣ may be e.g. at least 3.5 mm. The thickness is defined as the distance between a first surface and an opposite second surface. The thickness of the panel 100 is more than the thickness of the preform 600 as will become evident. The length L of the preform 600 may be more than the thickness hₚᵣ of the preform. In an embodiment the length L is at least five times the thickness hₚᵣ. In an embodiment the length L is at least ten times the thickness hₚᵣ. The width W of the preform 600 may be more than the thickness hₚᵣ of the preform. In an embodiment the width W is at least five times the thickness hₚᵣ. In an embodiment the width W is at least ten times the thickness hₚᵣ. For sake of clarity, the "length" and the "width" may be selected such the length is greater or equal to the width. The size of the preform depends on the application. In a vehicle, the length L of the preform may be e.g. at most 20 m, at most 15 m or at most 10 m. In a vehicle, the length L of the preform may be e.g. at least 0.5 m, at least 1 m or at least 2 m. In these or other applications, the length of the preform may be e.g. from 10 cm to 20 m.

Figure 1b shows, in a side view a preform 600 for a panel. The preform 600, and therefore also a panel, comprises at least two layers 110. If strength, light weight an recyclability are required, a layer 110 may comprise natural fibers, e.g. in the form of wood or paper. All the layers 110 are not necessarily of the same material.

In an embodiment, at least one of the layers 110 comprises wood. The preform 600 comprises also adhesive material 120 in between the layers 110. The thickness of the layer 110 that comprises wood may be from 0.2 mm to 5 mm. The preform may comprise also other layers such as paper or metal foil. In addition or alternatively, the preform may comprise at least one layer of a polymer (e.g. an elastomer such as rubber) or at least one layer cork. In addition or alternatively, the preform may comprise at least one layer comprising both cork and rubber like material such as elastomer. The different materials may be used to engineer the properties of the preform, such as sound insulation, thermal insulation, reflectivity, and heat resistance. The thickness of those layers may be less, e.g. at least 10 µm. Elastomer, such as rubber, increases the elasticity of the panel, whereby the sound insulation properties may be improved. Moreover, elasticity may be a desired property particularly in floorings, since when an object falls onto the panel, the object is more tolerant to impacts with an elastic floor than with a hard floor. These properties are applicable also to a surface construction of a panel 100 comprising at least a surface layer 170. More details of the surface construction will be discussed below.

The layer 110 that comprises wood may have been manufactured by one of rotary cutting, flat slicing, quarter slicing, half-round slicing, and rift cutting. These methods are known as such in plywood manufacturing, and different methods result in a slightly different visual appearance of the layer. Rotary cutting may also be referred to as turning or rotary turning. In an embodiment, the layer that comprises wood has been manufactured by rotary cutting. The layers of plywood may be referred to as veneers. A layer 110 may comprise fibrous material, such a wood or paper. A layer 110 comprising fibrous material may have a fiber orientation in the plane 110 comprising the fibrous material. In this way, the layer is easily flexible in at least one direction, e.g. the direction perpendicular to the fiber orientation, whereby the fiber orientation is parallel to the bending axis. This is particularly true for a layer 110 comprising wood, e.g. a wooden veneer.

In an embodiment, the preform 600 comprises plywood. In an embodiment, the preform 600 comprises plywood that comprises thermoplastic adhesive layers 120 and wooden veneers 110. In an embodiment, the plywood comprises at least three layers 110 that comprise wood. In an embodiment, the preform 600 is a plywood panel.

The number of layers 110 in the preform 600 is preferably at least three. In this context, the thermoplastic material 120 in between the layers is not considered a layer 110. More preferably, the number of layers 110 may be e.g. at least 5, at least 7, at least 9, at least 11, at least 13, at least 15, or at least 17. In case the layers comprise anisotropic material, such as wood, paper, fiberglass or other fibrous material, the number of layers is preferably odd (i.e. 2N+1, wherein N is an integer). Moreover, the mutual orientation of adjacent layers is in this case is preferably 90 degrees rotated, wherein the orientation of the layer is characterized by the material properties. For example, in plywood the anisotropic layers (veneers) comprising wood are such oriented, and the number of layers is typically odd. The number of layers may be even, e.g. when layers 110 of the preform 600 comprises, alternatively or in addition to wood, other material or materials. E.g. in a fibrous material the orientation of the layer is characterized by the orientation of the fibers. Thus the fiber orientation of a layer may be essentially perpendicular to the fiber orientation of an adjacent layer.

Preferably many of the layers 110 comprise wood. The preform 600 may comprise layers 110 that comprise wood and layers that do not comprise wood. The number of layers 110 that comprise wood may be more than 50 % (half) of the number of the layers 110 of the preform 110. In this aspect, the thermoplastic layers 120 are not considered layers 110. Preferably the number of layers 110 that comprise wood is more than 70 %, and more preferably more than 90 % of the number of the layers 110 of the preform 110.

Figure 1c shows a typical use of a panel 100. The panel 100 may be made using the preform of Fig. 1 a or 1 b. A panel 100a may be used as a floor of a vehicle 200. In addition or alternatively, a panel 100b may be used as a wall of a vehicle 200. The vehicle 200 comprises a body 210, to which a panel 100 may be fixed. The term "vehicle" refers to a mobile machine that is designed or used to transport passengers and/or cargo. A vehicle may be e.g. a car, a truck, a lorry, a train, a ship, a boat, or an aircraft. Vehicles that do not travel on land often are called a craft, such as a watercraft, a sailcraft, an aircraft, a hovercraft and a spacecraft. Land vehicles are classified broadly by what is used to apply steering and drive forces against the ground: wheeled, tracked, railed or skied.

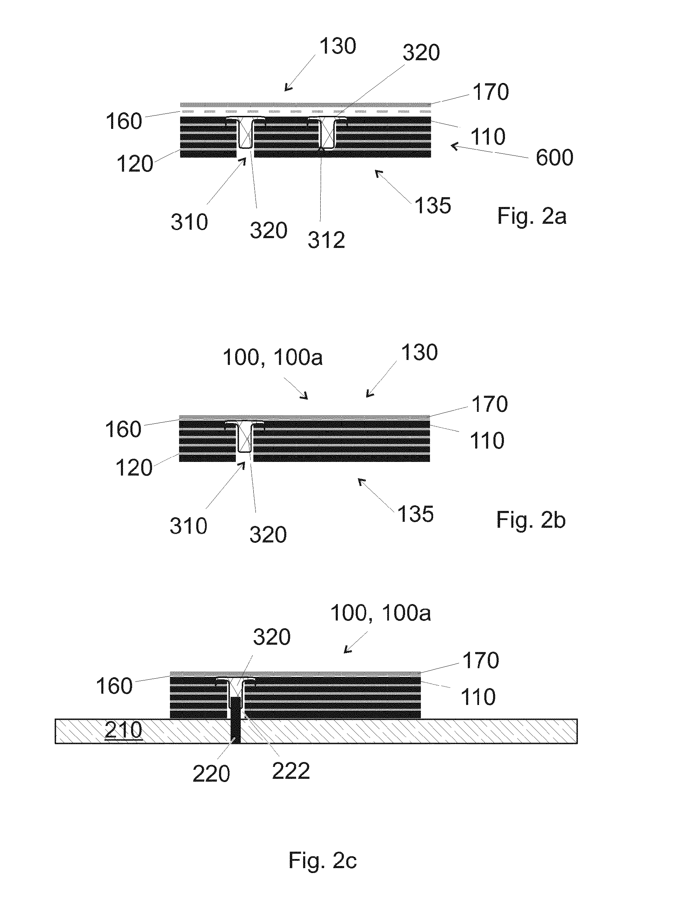

Figure 2a shows, in a side view, components of a panel 100. The panel 100 comprises at least a part of the preform 600, whereby the panel 100 comprises at least part of the layers 110 and at least part of the adhesive layers 120. Fig. 2b shows, in a side view, a panel 100, in which a surface layer 170 has been arranged, e.g. attached, onto the perform 600.

The panel of Fig. 2b comprises
- a first surface 130 and a second surface 135,
- a surface layer 170, wherein the surface layer comprises the first surface 130,
- at least two layers 110, wherein at least one of the at least two layers 110 comprises wood,
- adhesive material 120 in between the at least two layers 110, and
- a fixing means 320, wherein
- the fixing means 320 is arranged at least partly in the panel 100 such that
- the fixing means 320 is covered on at least a first side of the panel with the surface layer 170.

When the fixing means 320 is arranged at least partly in the panel 100, at least one of the at least two layers 110 is arranged to mechanically support the fixing means 320.

Referring to Fig. 2a, the panel may comprise a sub-surface layer 160. Referring to Fig. 3b, a panel may comprise the surface layer 170 and another surface layer 171.

In this way, the fixing means 320 is concealed (i.e. covered) by the surface layer 170. The fixing means 320 may be covered e.g.:
- on only the first side with only the first surface layer 170, or
- on only the first side with the first surface layer 170 and another layer 160 (Fig. 2b), or
- on the first side with the first surface layer 170 and on the second side with a second surface layer 171 (Fig. 3b), or
- on the first side and the second side with the first surface layer 170 (not shown).

The term "side" of the panel here refers to a half of the panel. Thus the panel 100 comprises two sides. The first surface 130 of the panel is arranged in the first side of the panel 100. The second surface 135 of the panel is arranged in the second side of the panel 100. As the fixing means 320 is covered on at least the first side of the panel, the fixing means 320 is arranged beneath the first surface 130. Furthermore, the fixing means 320 is arranged beneath the surface layer 170. As depicted in Figs. 2a and 2b, the fixing means 320 penetrates at least one of the at least two layers 110.

In Fig. 2a, wherein the parts forming the panel 100 are shown, the surface layer 170 is not attached to the preform 600 for the panel. The surface layer may be attached using an adhesive layer 160. In general, the surface layer 170 may be transparent, opaque, or reflective. The surface layer may be attached or otherwise arranged (e.g. sprayed or brushed) on the preform 600, i.e. on a layer 110 of the preform 600. The thickness of the surface layer 170 may be e.g. from 10 µm to 5 mm.

In an embodiment, the surface layer comprises 170 wood. In this embodiment, the visual appearance is good, since the panel looks like an ordinary plywood panel. Such a panel may be utilized e.g. in pieces furniture. However, without an additional coating, such a panel is not resistant to moisture. In another embodiment, the surface layer comprises at least one of phenol, polyurethane, polyethylene, polypropylene, and copolymer of polyethylene and polypropylene. These materials are more moisture resistant and more wear resistant than wood. Thus such panels may be utilized e.g. in vehicles.

Referring to Fig. 2a, a hole 310, 312 may be machined to the preform 600. Thereby, a preform 600 may comprise a hole 310, 312. The hole may run through the preform 600, i.e. from a first surface to another, opposing surface, as depicted with the reference number 310. Alternatively, the hole may be a pit in a surface of the preform 600, wherein the hole does not run through the preform, as depicted with the reference number 312. Preferably in the panel a hole 310 runs through all the layers 110. Such a through-hole 310 is more easily manufactured than a pit-type hole 312. At least part of a fixing means 320 is arranged in a hole 310, 312.

Referring to Fig. 2b, the surface layer 170 may be attached to the preform, whereby the panel 100 comprises the surface layer 170. As shown in Fig. 2b, in an embodiment the surface layer 170 is essentially flat at the location of the fixing means 320, whereby the panel may be visually attractive. The term "essentially flat" means that either
- the surface layer 170 is flat (e.g. planar) at the location of the fixing means 320, or
- the distance of the surface layer 170 at the location of the fixing means 320 from the planar extension of the surface layer 170 is at most 10 % of the thickness of the panel hₚ. The planar extension of the surface layer 170 means a plane that has several mutual points with the surface 170 and extends above or through the hole for the fixing means. The planar extension may thus be e.g. the surface 630 (Fig.5e1) of the preform 600 that has been removed when forming the hole 310,312.

In this way, the fixing means 320 does not protrude from the panel on the first side. Moreover, even if the fixing means is located deep in the hole 310, 312, the surface layer does not significantly sag at the location of the fixing means. This may be achieved using a filler material on the fixing means. Thereby, the panel may comprise the filler material between the fixing means 320 and the surface layer 170.

Furthermore, in an embodiment, the panel comprises a surface construction, wherein the surface construction comprises the surface layer. The surface construction may further comprise an adhesive layer, such as the adhesive layer 160 of Fig. 2b (cf. also Fig. 2a). In an embodiment, the surface construction is water-proof. In another or the same embodiment, the surface construction is humid-proof. In this way, the surface construction may protect the at least two layers 110 from moisture.

The waterproofness may be characterized e.g. by the IP level 2. The IP code in the IP level refers to the Ingress Protection Rating, i.e. International

Protection Rating. It is defined in the standard ANSI/IEC 60529-2004 (approved November 3, 2004). Thus the surface construction may be waterproof against water equivalent to 3 mm rainfall per minute, at least for 10 minutes. Another possibility to characterize waterproofness is to assume that wetting occurs by Fickian diffusion. For example, the diffusion coefficient for some polymers that are generally considered water proof are about 3×10⁻¹² m²/s. E.g. for some polyurethane coatings, a diffusion constant of from 3×10⁻¹⁴ m²/s to 2×10⁻¹³ m²/s have been measured. A larger diffusion constant means faster diffusion, and conversely, a poorer waterproofness. For example, for wood the diffusion coefficient may be around from 0.3×10⁻³ m²/s to 1.4×10⁻³ m²/s. In a preferred embodiment, the surface construction is more water proof than wood, e.g. the diffusion coefficient of the surface construction is less than 0.1 × 10⁻³ m²/s. Preferably, the diffusion coefficient of the surface construction is less than 1 × 10⁻⁶ m²/s. More preferably, the diffusion coefficient of the surface construction is less than 1 × 10⁻⁹ m²/s. It is noted that the diffusion coefficient is dependent on temperature, and the given limit refers to normal operating temperature of the panel. The normal operating temperature may be e.g. 30 °C.

Figure 2c shows the use of the panel 100 (100a in particular) as a floor element in a vehicle. The vehicle 200 (Fig. 1 c) comprises a body 210, such as a frame, to which the panel 100 is fixed. The panel 100 may be fixed using a second fixing means 220, which is fixed to the fixing means 320 of the panel 100. The second fixing means 220 may be e.g. a screw that is arranged to be tightened to the fixing means 320 of the panel. The body 210 typically comprises bars having an extending profile in the longitudinal direction of the bar. The shape of the profile may resemble the letter "U", whereby the bars may comprise U-profiles. The panel 100 may in this way be fixed to these bars with the second fixing means 220. The body 210 may also or alternatively comprise bars having a profile resembling the letter "Z", i.e. the body may comprise Z-bars. The body 210 may also or alternatively comprise bars having a profile resembling the letter "I", i.e. the body may comprise I-bars.

In some cases the floor element (i.e. panel 100) may need to be removed e.g. from the body 210 e.g. for cleaning, for replacement, or for repairing. Therefore, the fixing means 320 is preferably a detachable fixing means 320. A detachable fixing means 320 may be
- attachable to an object, such as the second fixing means 220 or another fixing means 225 (Figs. 9a and 9b) and
- detachable from the object, such as the second fixing means 220 or the another fixing means 225 (Figs. 9a and 9b).

A detachable fixing means 320 is preferred also in some other embodiments, such as lighting devices (Fig. 9d). A screw-type connection between the fixing means 320 and the second fixing means 220 is detachable.

In a preferred embodiment in the vehicle floor, the surface layer 170 faces upwards. The surface layer 170 may be comprised in a surface construction. The surface construction comprises the layer 170 and optionally one of the layer 160 and other layers. In this way, the surface construction protects the rest of the panel 100 from moisture, water, dirt, and wear. When the surface construction protects the panel 100, the panel does not swell due to moisture. This means a long service life of the panel. In a comparative solution, the panel 100 may be fixed with a screw that is driven through the panel. Thereby, even if the panel comprised a protective surface construction, water and/or humidity could penetrate to the panel from the hole made by the screw. This would induce swelling, which would decrease the service life of the panel. Moreover, a part of the screw could protrude from the floor, whereby the load carried by the vehicle could be damaged by such screws.

Figure 3a shows, in a side view, a part of a panel 100 comprising a concealed fixing means 320. The thickness of the panel, hp, is depicted in the figure. As is clear, the thickness of the panel 100, hp, is greater than the thickness of the preform 600, hₚᵣ, by the thickness of the surface construction.

Figure 3b shows, in a side view, a part of a panel 100 comprising a concealed fixing means 320. The thickness of the panel, hp, is depicted in the figure. The panel 100 of Fig. 3b comprises a second surface layer 171. The second surface layer 171 comprises the second surface 135 (Figs. 2a,2b) of the panel 100. The second surface layer 171 may be attached to the panel with an adhesive layer 161. On the second surface 135 the panel 100 may comprise a marking 180 indicative of the concealed fixing means. In Fig. 3b, the marking is a pit in the second surface. The pit is located at the location of the fixing means. The size (diameter) of the pit may be indicative of the size of the fixing means. Therefore, the marking 180 may be indicative of at least one of the presence of the fixing means, the location of the fixing means, and the size of the fixing means. As is clear, the thickness of the panel 100, hp, is greater than the thickness of the preform 600, hₚᵣ, by the thickness of the surface structure and the thickness of a second surface structure, wherein the second surface structure comprises the second surface layer 171 and optionally comprises other layers, such as the adhesive layer 161. The second surface construction may be humid-proof. In this way, the second surface construction may protect the at least two layers of the panel 100 from moisture from the second surface 135.

Even if the panel 100 comprises surface layers on both sides (Fig. 3b), the panel 100 does not necessarily comprise a marking. The fixing means 320 may comprise ferromagnetic material, in which case the location and presence of the fixing means may be found magnetically. Alternatively or in addition, the fixing means may comprise dielectric material. In this case the presence and location of fixing means may be found capacitively, e.g. be measuring the capacitance of a capacitive sensor comprising at least one electrode. Alternatively or in addition, the fixing means may comprise material having a different density than the profile (i.e. the rest of the panel). In this case the presence and location of fixing means may be found for example by ultrasonic means.

In an embodiment the fixing means 320 comprises polymer material. In this embodiment, after its service life, the panel 100 may be crushed or cut to smaller pieces with a crusher or a cutter. Furthermore, as compared to a panel comprising fixing means 320 comprising metal, the fixing means 320 of polymer material are softer and thus do not as easily damage the blades or rolls of the cutter or crusher. Furthermore the crushed material may comprise the crushed fixing means. Some polymer materials are burnable without toxic emissions. The fixing means may comprise burnable polymer material. Moreover, if the preform for the panel is burnable (without toxic emissions, such as plywood), and the materials for the surface construction are selected such that the they are burnable, all the crushed material of the panel may be burnable. In an embodiment the panel is burnable. In another embodiment, wherein the fixing means are made of biodegradable polymer, the panel is biodegradable. In yet another embodiment, the fixing means are made of magnetic material, whereby the pieces of the fixing means may be removed from the crushed material using a magnet.

The thickness of the panel, hp, is defined as the distance between the first surface 130 and the second surface 135. In some embodiments the thickness of the panel is at least 4 mm.

Figures 4a1 to 4c4 and 5f1 to 5f7 show examples of the fixing means 320.

Referring to Fig. 4a1, the fixing means 320 has a height h_{f}. Referring to Fig. 3a and 3b, the height of the fixing means 320 is oriented in the direction from the second surface 135 of the panel to the first surface of the panel 130. By definition, the thickness of the panel is also oriented in this direction. Preferably, the thickness of the panel is greater than the height of the fixing means. The thickness is greater by at least the thickness of the surface layer 170. In this way, the panel 100 may seem to have essentially uniform thickness, and the panel 100 may be visually attractive. Such a fixing means 320 also does not protrude from the panel 100, whereby a load is not damaged by a collision to a projection. Therefore, the first surface 130 and the second surface 135 may be even, even if the fixing means is arranged in the panel. The fixing means 320 may be arranged between the first surface 130, and a planar extension of the second surface 135, wherein the planar extension is the plane covering the opening of the mounting hole 310 (cf. e.g. Fig. 2b).

Moreover, when the thickness of the panel 100 is greater than the height of the fixing means 320, the panel comprising the fixing means is essentially flat. Such flat panels are easier to store than panel having protruding fixing means (cf. Fig. 5d1 and 5d2).

However, to ensure a strong fixing between the fixing means 320 and a second fixing means (e.g. the second fixing means 220 of Fig. 2c) the height of the fixing means should not be too small. In an embodiment, the height of the fixing means is at least 50 % of the thickness of the panel. In some of these embodiments, the height of the fixing means is at least 70 % of the thickness of the panel. In some of these embodiments, the height of the fixing means is at least 80 % of the thickness of the panel. In some of these embodiments, the height of the fixing means is at least 90 % of the thickness of the panel.

When the thickness of the panel 100 is greater than the height of the fixing means 320, a space 222 may be formed in between a support 210 (i.e. supporting structure) and the fixing means 320, as depicted in Fig. 2c. The space may be formed, e.g. when the fixing means 320 is located within a distance from the support 210. The distance determines the size of the space. The distance may be e.g. at least 100 µm. The space 222 may be filled with air, a sealant, an adhesive, or other material. In this way, a metal-to-metal contact between the fixing means 320 and the supporting structure 210 does not exist. Therefore, corrosion problems may be reduced. Still further in this way, the panel 100 becomes supported by the supporting structure 210, not only the fixing means 320. This enables a mechanically strong support for the panel. Moreover, as the panel may be more elastic (e.g. have a smaller elastic modulus) than the fixing means, the structure enables small deformations without fracturing. This even further increases the mechanical strength of the structure.

The fixing means 320 of Fig. 4a1 comprises attaching means 322. The attaching means 322 have the form of a spike. The attaching means 322 is used to attach the fixing means 320 to the preform 600 for the panel to form the panel 100. Attaching means are not necessarily needed, since the fixing means may be attached to the panel e.g. by using adhesive.

The fixing means 320 has a first dimension S₁ in its first and end a second dimension S₂ in its second end. The dimension here refers to the diameter of a cross sectional region of the fixing means, wherein the cross sectional region is defined by a plane that is perpendicular to the direction of the height h_{f} of the fixing means. The direction of height has been defined above (cf. also Fig. 3a). The cross sectional region has an area, defined by the measures, e.g. diameter, of the region. This area is referred to as "cross sectional area" (A₁, A₂, Fig. 4a1). Thus, the fixing means has
- a first cross sectional area A₁ facing the first surface of the panel, and
- a second cross sectional area A₂ facing the second surface of the panel.

In the embodiment of Figs. 4a1, 3a, and 3b the second cross sectional area A₂ is smaller than the first cross sectional area A₁.

In Fig 4a1, the first cross sectional area is denoted by A₁ and the second cross sectional area is denoted by A₂. As seen from the figure A₂<A₁. It is noted that the larger cross sectional area faces the first surface, i.e. the surface that is comprised by the surface layer 170, as shown in Fig. 3a. Thus, when the fixing means is pulled from the second side, the larger cross sectional area A₁ on the first side of the panel makes the connection mechanically strong. In particular, in this case, the cross sectional area can be larger than the cross sectional area of the hole 310 (Fig. 3a). In case the cross sectional area of the hole is not constant, the larger cross sectional area (max(A₁,A₂) may be larger than the smallest cross sectional area of the hole. For example, the first cross sectional area A₁ (of the fixing means) can be larger than the area of the hole 310, wherein the hole's area faces the surface layer 170. In this arrangement, the layers 110 and the adhesive layers 120 of the panel support the fixing means 320 when a pulling force acts on the fixing means 320 from the second side. Preferably A₁ is at least 1.5 times A₂. Preferably A₁ is at least 2 times A₂. Preferably A₁ is at least 3 times A₂. These measures improve the strength of the panel.

The panel of Fig. 3a, having the fixing means of Fig. 4a1 and 4a2, may be used e.g. as shown in Fig. 2c. In particular, when the second cross sectional area A₂ is smaller than the first cross sectional area A₁, as in Figs. 3a and 2c, the panel 100 may be arranged in connection with a support 210, such as a frame or a body. As discussed above, because of the relative size of the areas A₁ and A₂, the panel is resistant to pulling forces from the second side. However, the size of the support may be large. Therefore, the structure is also resistant to pushing force applied onto the first surface of the panel, due to the support 210. In the structure of Fig. 2c, a part of the panel 100 is arranged in between the fixing means 320 and the support 210. The part of the panel may comprise a part of at least one layer 110. As a part of at least one layer 110 is arranged in between the support 210 and the fixing means 320, the structure is resistant to both pulling and pushing forces. In particular, a part of at least one layer 110 is arranged in between the support 210 and the fixing means 320 in a direction, wherein the direction is parallel to the thickness of the panel 100. This effect is achieved by the described sizing of the areas A₁ and A₂ of the fixing means, and the support 210.

Furthermore, in this configuration, at least one layer 110 is arranged to mechanically support the fixing means 320. In particular, at least one layer 110 is arranged to mechanically support the fixing means 320 in a direction, wherein the direction is parallel to the thickness of the panel 100.

However, it is possible that the size of the support 210 is not large compared to the size of the fixing means. In this case the shape of the fixing means may be designed to strengthen the panel also for pushing forces, as will be discussed below, e.g. in connection with Figs. 5f1 to 5f8.

Figure 4a2 shows an end (bottom) view of the fixing means of Fig. 4a1. The view is taken as seen from the line IVa2-IVa2 of Fig. 4a1. As depicted in the figure, in this embodiment the first cross sectional area is circular. Moreover, the second cross sectional area is circular. The first diameter S₁ corresponds to the first cross sectional area A₁, and the second diameter S₂ corresponds to the second cross sectional area A₂. In this embodiment, the first diameter S₁ may be e.g. from 10 mm to 20 mm. Moreover, the second diameter S₂ may be e.g. from 5 mm to 10 mm.

Referring to Fig. 4a2, the fixing means 320 comprises mounting means. In particular, the fixing means 320 limits a mounting hole 340. The mounting hole can be used e.g. to fix another fixing means to the fixing means 320 (Figs. 2c, 9b, 9c, 9d). In Fig. 4a2 the mounting hole 340 has circular cross section. The diameter of the circular cross section is denoted by S₃. The diameter may be from 4 mm to 10 mm. In Fig. 4a2 the fixing means 320 comprises threads 342 arranged towards the mounting hole 340. Using these threads 342, another fixing means, such as a screw, may be fixed to the fixing means 320. The threads may be arranged such that a second fixing means may be tightened to the fixing means 320 when the second fixing means is rotated clockwise as seen from the second surface 135 towards the first surface 130. The threads may be arranged such the second fixing means may be loosened from the fixing means 320 when the second fixing means is rotated clockwise as seen from the second surface 135 towards the first surface 130.

The fixing means 320 may comprise at least one of metal, polymer, composite, carbon fibres, and wood-polymer composite.

Figure 4b1 shows a side view of another embodiment of the fixing means 320. In contrast to Fig. 4a1, both the diameters S₁ and S₂ are equal or essentially equal. The fixing means may be attached into the panel e.g. using adhesive. In addition or alternatively, the fixing means may comprise second threads 318 arranged on the outer surface of the fixing means 320. The second threads 318 may be used to fix the fixing means 320 to the panel 100. The threads may be oriented in the clockwise direction, whereby the fixing means 320 may be fixed to the panel by rotating it in the clockwise direction. The threads may be oriented in the counter-clockwise direction, whereby the fixing means 320 may be fixed to the panel by rotating it in the counter-clockwise direction. Furthermore, a part of the second threads 318 may be oriented in the clockwise direction and another part of the second threads 318 may be oriented in the counter-clockwise direction. The use of both clockwise and counter-clockwise threads may improve the strength of the joint between the fixing means 320 and the panel 100.

Figure 4b2 shows, in an end view, an embodiment of a fixing means. The fixing means may have a side view as shown in Fig. 4b1. The figure shows the mounting hole 340. The mounting hole may comprise threads, e.g. the threads 342 discussed in connection with Fig. 4a2.

Figure 4c1 shows a side view of another embodiment of the fixing means 320. In this embodiment, the first diameter S₁ is greater than the second diameter S₂, whereby the first cross sectional area is also greater than the second cross sectional area. In this way, the technical effects discussed above may be achieved.

Figure 4c2 shows, in an end view, and embodiment of a fixing means. The fixing means may have a side view as shown in Fig. 4c1. The figure shows the mounting hole 340. The mounting hole may comprise threads (cf. Fig.4a2, threads 342).

Figures 4c1a to 4c1c show in more detail the shape of the mounting hole 340. The figures are cross sectional view of different fixing means, wherein the cross sectional plane is shown in Fig. 4c2 with the line IVc1a-IVc1a.

The embodiment of Fig. 4c1 a comprises threads 342 for mechanically fixing an object, such as another fixing means, to the fixing means 320.

Fig. 4c1b shows an embodiment, wherein the mounting hole has a shape 344 for mechanically locking an object, such as a second fixing means, to the mounting hole. The mounting hole 340 comprises a widening portion defined by the shape 344. Thereby, if the second fixing means comprises also a widening portion adapted to the shape 344 of Fig. 4c1b, the second fixing means may be locked to the fixing means 320 of Fig. 4c1b simply by pushing the second fixing means into the fixing means 320 of the panel.

Fig. 4c1c shows an embodiment, wherein the mounting hole has a shape 344 for mechanically locking a second fixing means to the mounting hole. The mounting hole 340 comprises a narrowing portion defined by the shape 344. Thereby, if the second fixing means comprises a narrowing portion adapted to the shape 344 of Fig. 4c1b, the second fixing means may be locked to the fixing means 320 of Fig 4c1c simply by pushing the second fixing means into the fixing means 320 of the panel.

Fig. 4b3 shows, in an end view, and embodiment of a fixing means 320. The fixing means may have a side view as shown in Fig. 4b1. The figure shows four mounting holes 340. The mounting holes may comprise threads 342 or shapes 344 for mechanically locking an object to the mounting holes 340.

The dimensions of the first and second cross sectional areas are equal, S₁=S₂.

Fig. 4c3 shows, in an end view, and embodiment of a fixing means 320. The fixing means may have a side view as shown in Fig. 4c1. The figure shows four mounting holes 340. The mounting holes may comprise threads 342 or shapes 344 for mechanically locking an object to the mounting holes 340. The dimension S₁ of the first cross sectional area is greater than the dimension S₂ of the second cross sectional area.

Fig. 4b4 shows, in an end view, and embodiment of a fixing means. The fixing means may have a side view as shown in Fig. 4b1. The figure shows three mounting holes 340. The mounting holes may comprise threads 342 or shapes 344 for mechanically locking an object to the mounting holes 340. The dimensions of the first cross sectional area are S₁ and S_{1,mx}, wherein S₁ is the smaller of these dimensions, wherein these dimensions may be equal, as shown in Fig. 4b3. As is clear from the figure, S_{1,mx} is greater than S₁. Therefore, the fixing means 320 is a bar-like fixing means. The dimensions of the second cross sectional area are S₂ and S_{2,mx}, wherein S₂ is the smaller of these dimensions, wherein these dimensions may be equal, as shown in Fig. 4b3. The dimensions of the first and second cross sectional areas are equal, i.e. S₁=S₂ and S_{1,mx}=S_{2,mx}. The fixing means may be arranged into a rectangular preform, whereby the panel may have a rectangular shape. The length of the fixing means (i.e. S_{1,mx} or S_{2,mx}) may be arranged in a first direction in the panel. The first direction of the panel may be parallel to the length of the panel. The first direction of the panel may be parallel to the width of the panel. The first direction may be arranged in another angle with respect to the length of the panel. The angle may be e.g. from 1 to 89 degrees, such as from 30 to 60 degree, and in an embodiment 45 degrees. In another embodiment, the first direction is arranged parallel to the diagonal of the rectangular preform. The length of the fixing means may be less than the dimension of the panel in the first direction (e.g. the length or the width of the panel). In an embodiment, the fixing means is arranged to extend from one supporting structure to another supporting structure, such as a frame beam of a vehicle. In this embodiment, the fixing means is arranged to be fixed to a first supporting structure and to a second supporting structure. The length of the fixing means may be e.g. at least 1 cm, 2 cm, 5 cm, or 10 cm less than the dimension of the panel in the first direction.

Fig. 4c4 shows, in an end view, and embodiment of a fixing means. The fixing means may have a side view as shown in Fig. 4c1. The figure shows three mounting holes 340. The mounting holes may comprise threads 342 or shapes 344 for mechanically locking an object to the mounting holes 340. The dimensions of the first cross sectional area are S₁ and S_{1,mx}, wherein S₁ is the smaller of these dimension. The dimensions of the second cross sectional area are S₂ and S_{2,mx}, wherein S₂ is the smaller of these dimension. The larger of these dimensions are equal, i.e. S_{1,mx}=S_{2,mx}. However, as depicted in Fig. 4c1, because of the difference in the smaller dimensions, the dimensions, the first cross sectional area is larger than the second cross sectional area. The first cross sectional area is equal to S₁×S_{1,mx}, the second cross sectional area is equal to S₂×S_{2,mx}, and S₁>S₂. It is evident that for the larger dimensions a similar relation could apply, i.e. S_{1,mx}>S_{2,mx}. However, as will be discussed in connection with Figs. 5e1 to 5e7, for the larger dimensions an opposite similar relation could apply, i.e. S_{1,mx}<S_{2,mx}. It is understood that the larger dimension may also be equal to the other dimension, i.e. in an embodiment S₁=S_{1,mx} (cf. Figs. 4b3 and 4c3). In the embodiment or in another embodiment S₂ may equal S_{2,mx}.

Fig. 5a shows, in a bottom view, a panel 100. The panel 100 comprises several fixing means 320. The panel 100 comprises three circular fixing means 320a. The circular fixing means 320a may be e.g. similar to the fixing means of Figs. 4a1 and 4a2; or Figs. 4b1 and 4b2; or Figs. 4c1 and 4c2. The panel 100 comprises a bar-like fixing means 320b. The bar-like fixing means 320b may be e.g. similar to the fixing means of Figs. 4b4 and 4b1; or Figs. 4c4 and 4c1. The panel 100 comprises two fixing means 320c having a square cross section. The fixing means 320c having a square cross section may be e.g. similar to the fixing means of Figs. 4b3 and 4b1; or Figs. 4c3 and 4c1.

The panel of Fig. 5a comprises fixing means 320 in the boundary area of the panel 100. Figure 5b shows another panel 100. In contrast to Fig. 5a, the panel of Fig. 5b comprises fixing means 320 only in the boundary area of the panel 100. The boundary area is defined by the measures of the panel. The panel has a length L and a width W (cf. Fig. 1 a). A point of the panel 100 is in the boundary area, if and only if the distance of the point from a first boundary of the panel is less than a boundary area width.

The boundary area width may be e.g. one of
- one third (1/3) of the distance of a second boundary of the panel from the first boundary of the panel, wherein second boundary of the panel is opposite to the first boundary of the panel. The second boundary of the panel may be parallel to the first boundary of the panel.
- one fifth (1/5) of the distance of a second boundary of the panel from the first boundary of the panel, wherein second boundary of the panel is opposite to the first boundary of the panel. The second boundary of the panel may be parallel to the first boundary of the panel.
- one tenth (1/10) of the distance of a second boundary of the panel from the first boundary of the panel, wherein second boundary of the panel is opposite to the first boundary of the panel. The second boundary of the panel may be parallel to the first boundary of the panel.
- one twentieth (1/20) of the distance of a second boundary of the panel from the first boundary of the panel, wherein second boundary of the panel is opposite to the first boundary of the panel. The second boundary of the panel may be parallel to the first boundary of the panel and
- one of 5 cm, 10 cm, and 15 cm.

Moreover, the (relative) boundary area width may smaller for the longitudinal edges of the panel (i.e. the edges being parallel to the length, wherein the length is at least the width) than for the transversal edges of the panel (i.e. the edges being parallel to the width, wherein the length is at least the width). For example, for a panel having a length L and a width W such that L>W, the boundary area width in the direction of length of the panel, for the edges parallel to width of the panel, may be 1/20×L; while the boundary area width in the direction of width of the panel, for the edges parallel to length of the panel, may be 1/10×W. Also other fractions of L and W are applicable, as detailed above.

Referring to Fib 5b, a point may be in the boundary area e.g. when its distance (measured in the horizontal direction) is less than L/3, as measured from a (vertical) boundary. Moreover, a point may be in the boundary area e.g. when its distance (measured in the vertical direction) is less than W/3, as measured from a (horizontal) boundary.

For example, in a floor of a vehicle, a panel is often fixed to the body of the vehicle only from the boundary areas. Therefore, in an embodiment, the panel comprises fixing means 320 only in the boundary area of the panel 100.

Figure 5c1 shows another panel 100. In addition to some of the previously presented features, the panel 100 comprises elastic material 330 in between the fixing means 320 and a layer of the panel 110. The elastic material 330 is different from the material of the fixing means 320. The purpose of the elastic material 330 is to allow for small movements of the fixing means 320 in relation to the rest of the panel 100. By mechanical deformations, the elastic material 330 distributes the stresses in the structure more evenly, and in this way increases the strength of the structure. In order to distribute stress, the modulus of elasticity of the elastic material may be less than the modulus of elasticity of the rest of the panel. In particular, as one layer 110 comprises wood, the modulus of elasticity of the elastic material 330 may be less than the modulus of elasticity of wood. The Young's modulus of plywood is typically in the range from 6.9 GPa to 8.6 GPa. In contrast, the Young's modulus of some elastic materials include: from 2 GPa to 4 GPa for Nylon®, from 2 GPa to 2.7 GPa for polyethyleneterephtapale (PET), from 1.5 GPa to 2 GPa for polypropylene, and from 0.01 to 0.1 GPa for rubber. Thus, the Young's modulus of the elastic material 330 in some embodiments is at most 4 GPa. In some of these embodiment, the Young's modulus of the elastic material 330 is at most 2 GPa. In some of these embodiment, the Young's modulus of the elastic material 330 is at most 0.5 GPa.

In some embodiments, the elastic material 330 comprises thermally active material. A thermally active material means a material of which mechanical properties are heavily dependent on the temperature in the temperature range of a typical panel manufacturing process. The temperature range for a typical panel manufacturing process will be discussed in more detail below, however, the range may be from 1 °C to 200 °C. A thermally active material may e.g.
- melt in a temperature typically occurring in panel manufacturing,
- form foam, i.e. to rapidly expand, in a temperature typically occurring in panel manufacturing, or
- at least permanently expand in a temperature typically occurring in panel manufacturing.

The term "at least permanently expand" refers to materials that undergo thermal expansion (which is reversible when temperature decreases), and, in addition in some temperature, irreversibly (i.e. permanently) expand. The material remains expanded even if the temperature decreases.

All these thermally active materials may fill vacant spaces of the hole 310, 312 (Fig. 2a) during manufacturing. For example, temperatures typically occurring in the panel manufacturing range from 20 °C to 200 °C. The thermally active material may have the melting point between these temperatures. The thermally active material may have the foam forming point in between these temperatures. The thermally active material may undergo permanent deformations in between these temperatures.

Referring to Fig. 5c2, the panel may comprise stiff material 332 in between the elastic material 330 and a layer 110 of the panel 100. The stiff material 332 is different from the elastic material 330. The stiff material 332 has a Young's modulus that is greater than the Young's modulus of the elastic material 330. The Young's modulus of the stiff material may be at least of the same order as plywood. Therefore, the Young's modulus of the stiff material in an embodiment is at least 6 GPa. The stiff material may comprise metal. Metals have typically a Young's modulus of the order of 100 GPa to 400 GPa. Therefore, the Young's modulus of the stiff material in an embodiment is at least 50 GPa. The stiff material 332 further distributes stress in the panel 100 thereby increasing the strength of the panel 100. The stiff material may comprise metal such as steel or aluminum. In addition or alternatively, the stiff material may comprise polymer. The polymer may be e.g. polyyoxymethylene (POM). In addition or alternatively, the stiff material may comprise ceramic material. In addition or alternatively, the stiff material may comprise composite material, such as fiber reinforced polymer composite. In general, the stiff material may have at least one of the following properties:
- being mechanically stiff, e.g. having an elastic modulus of at least 1 GPa,
- being mechanically strong, e.g. having the compressive strength of at least 20 MPa, and
- having a high melting point, e.g. a melting point of at least 100 °C.

Referring to Figs. 5d1 and 5d2, the height of the fixing means 320 may also be greater than the thickness of the panel 100. In such a case, the fixing means 320 protudes from the panel, e.g. from the second surface 135. Fig. 5d1 shows a panel 100 comprising a concealed fixing means 320. The fixing means 320 is concealed on the first surface 130 by the surface layer 170. However, on the second surface 135, the fixing means 320 forms a projection, i.e. the fixing means 320 protudes from the second surface. The fixing means may, in this way, comprise mounting means for mounting an object to the fixing means. The fixing means 320 may e.g. comprise threads 342 on its outer surface, as depicted in Fig. 5d1. A nut may be thus attached to the fixing means 320.

Fig. 5d2 shows a panel 100 comprising a concealed fixing means 320. The fixing means 320 is concealed on the first surface 130 by the surface layer 170. The fixing means is essentially similar to the fixing means of Fig. 4a1. However, a second fixing means 220 has been fixed to the fixing means 320. In this way, the second fixing means 220 protudes from the second surface 135. The second fixing means 220 and the fixing means 320 may form, in combination, the concealed fixing means. The concealed fixing means may comprise threads 342 on its outer surface, as depicted in the Fig. 5d2. A nut may be thus attached to the fixing means 320.

The protruding fixing means may be used in some applications, such as in furniture, to place the panel to a correct position. In addition, the protruding fixing means may be used e.g. during form pressing to place the preform of the panel in a correct position within the form pressing device.

Referring to Figs. 5e1 to 5e6 the elastic material 330 or another material (e.g. hard adhesive) may also function as part of the fixing means. Thereby the elastic material or the other material may mechanically lock the fixing means 320 to the hole 310. Figure 5e1 shows a preform 600 for the panel, in a top view. In this top view, a first side 630 of the preform is shown. The preform comprises a hole 310. On the first side 630, the hole 310 has a first dimension and a second dimension, wherein the first dimension is greater than the second dimension. The first dimension is oriented in a first direction (vertically in Fig. 5e1).

However, referring now to Fig. 5e4, on the second side 635, the hole 310 has a first dimension and a second dimension, wherein the first dimension is greater than the second dimension, and first dimension is oriented in a second direction, wherein the second direction is different from the first direction. In Fig. 5e4 the second direction is perpendicular to the first direction, i.e. horizontal.

Thus, as seen from the side view of 5e3, the hole 310 becomes narrower in the first direction (i.e. the width decreases), when the observation point for the width moves from the first side 630 to the second side 635.

Moreover, as seen from the side view of 5e2, the hole 310 becomes narrower in the second direction (i.e. the width decreases), when the observation point for the width moves from the second side 635 to the first side 630. The reference numbers 632 and 633 indicate the sides of the preform, in order to clarify the orientation of the preform in Figs. 5e1 to 5e4.

Figure 5e5 shows a side view of a fixing means 320 arranged to be fixed into the hole 310. Figure 5e6 shows an end view of the fixing means 320 of Fig. 5e5. The fixing means 320 comprises a mounting hole 340 as discussed above.

When the fixing means 320 of Figs. 5e5 and 5e6 is arranged into the hole 310 of the preform for Figs 5e1 to 5e4, and the fixing means is covered from at least one side by the surface layers, a panel is formed. As is evident from the Figures 5e1 to 5e6, the fixing means 320 is smaller than the hole 310. The remaining hole may be filled with at least one of a filler material, an adhesive, the elastic material 330, and the adhesive 160. Thus the fixing means 320 may be locked into the hole 310 e.g. by the elastic material. Moreover, the fixing means is resistant both to a pulling force (tension) and to a pushing force (compression), provided that the elastic material (or the filler or some other material) attaches to the fixing means 320 well. The surface layer of the panel may be e.g. attached onto the first side 630 of the preform 600. Thus, a second fixing means may be attached to the fixing means 320 from the second side of the panel 100.

As discussed above, since the fixing means 320 and the elastic material 330 (or the other material) in combination become wider (in the first direction), when the observation point for the width moves from the second side 635 to the first side 630, the panel is resistant to a pulling force 230. This issue was discussed also together with Figs. 4a1 and 4c1. However, the panel made from the part of Figs. 5e1 to 5e6, as discussed is also resistant to a pushing force. This is because of the shape of the hole 310. As discussed above, the fixing means 320 and the elastic material 330 in combination become wider (in the second direction), when the observation point for the width moves from the first side 630 to the second side 635. Thus the panel resist also a pushing force 240. The principle for the strength is the same as discussed for the pulling force 230. The adhesion strength between the fixing means 320 and at least one of a filler material, an adhesive, the elastic material 330, and the adhesive 160 can be increased my means known as such, e.g. by roughening the surface of the fixing means or by covering the fixing means with a chemically active layer to improve the adhesion.

Still further, Figs. 5f1 to 5f8 show a panel 100 comprising fixing means 320, wherein the strength of the panel is increased both for a pushing force and a pulling force. The fixing means 320 is shown in a side view in Fig. 5f3. The fixing means comprises a first part 320a and a second part 320b.

The first part 320a is shown in Fig, 5f1. The first part comprises a top part 324 and a body part 325. The top part has the dimension S₁ and the body part has the dimension S₄. The cross section of the first part is circular and the dimension refers to diameter. Referring to Fig. 5f4, the top part 324 of the first part 320a may comprise a connecting means, e.g. a hole 334 for a tool. Therefore, the top part 324 may form a screw head, for screwing the first part to the second part 320b. The first part may alternatively be otherwise locked to the second part (cf. e.g. Figs. 4c1b and 4c1c). Referring to Fig. 5f6, the body part 325 of the first part 320a comprises a second mounting hole 336 for mounting the second part 320b to the first part 320a. The first part 320a may comprise threads arranged in the second mounting hole 336. The first part 320a may comprise a locking shape arranged in the second mounting hole 336 (cf. e.g. Figs. 4c1 b and 4c1 c).

The second part 320b is shown in Fig. 5f2 in a side view. The second part 320b comprises a bottom part 326 and a body part 327. The bottom part 236 has the dimension S₂ and the body part 327 has the dimension S₅. The cross section of the first part is circular and the dimension refers to diameter. Referring to Fig. 5f5, the bottom part 326 of the second part 320b may comprise a connecting means, e.g. threads on the body part 327 of the second part 320b. The body part 327 is arranged to fit at least partly to the second mounting hole 336 of the first part 320a. The body part 327 is arranged to be locked to the second mounting 336. Locking may be achieved by threads or other mechanical means. Referring to Fig. 5f7, the bottom part 326 of the second part 320b comprises the mounting hole 340 for mounting the second fixing means (e.g. 220, Fig. 2c) to the fixing means 320. Moreover, the second part 320b may comprise attaching means 322, which may be used to fix the second part 320b to the panel 100. In particular the attaching means 322 may prevent the rotation of the second part 320b with respect to the panel 100.

Figure 5f8 shows, in a side view, a panel 100 comprising the fixing means shown in Figs. 5f1 to 5f7. The panel comprises a hole 310. The hole has the minimum dimension of S₆, wherein the minimum dimension is a measure of width. As shown in the figure near the surfaces of the panel the hole may be wider to enable the top part 324 and the bottom part 326 to enter into the panel 100, i.e. beneath the planar extensions of the surfaces of the panels. As shown in the figure, the minimum dimension S₆ is smaller than the dimension S₂ of the bottom part 236. Moreover, the minimum dimension S₆ is smaller than the dimension S₁ of the top part 234. In this way, both the cross sectional areas A₁ and A₂ (cf. Fig. 4a1) are larger than the smallest cross sectional area of the hole. In particular, the larger cross sectional area (max(A₁,A₂) is larger than the smallest cross sectional area of the hole.

As depicted in Fig. 5f8, the fixing means 320 is located in the panel 100 such that at least part of at least one layer 110 is located in between a part of the fixing means 320 and another part 320 of the fixing means. Here the part of the fixing means may be comprised e.g. in the top part 324 and the another part may be comprised in the bottom part 326. In this way, the part of the layer 110 that is in between these locations of the fixing means 320 supports the fixing means 320 for both a pulling force and a pushing force. In particular, in the panel of Fig. 5f8 at least part of at least one layer 110 is located in between a part of the fixing means 320 and another part 320 of the fixing means in a direction, wherein the direction is parallel to the thickness of the panel. It is noted, that also in the embodiment of Fig. 3a, at least part of at least one layer 110 is located in between a part of the fixing means 320 and another part 320 of the fixing means. However, in the embodiment of Fig. 3a, the part of the panel that is located in between the parts of the fixing means in not located in between these parts in the direction of the thickness of the panel.

Referring to Fig. 5f8, the fixing means 320 comprises, in a first location, a first measure S₁, wherein the first measure is a measure of width. Moreover, the fixing means 320 comprises, in a second location, a second measure S₂, wherein the second measure is a measure of width. Moreover, the minimum dimension S₆ of the hole 310 is smaller than S₁ to increase the strength of the panel for a pulling or pushing force. Moreover, the minimum dimension of S₆ is smaller than S₂ to increase the strength of the panel for a pushing or pulling force (respectively). Preferably, the minimum dimension of S₆ is smaller than S₂ and S₁ to increase the strength of the panel for a pushing and pulling force.

As discussed above, a panel need not to be resistant to pushing forces in cases, where the panel is arranged in connection with a relatively large support 210. In this case, the support 210 may support the panel 100 under pushing forces. The support 210 may be a frame of a vehicle or a building, a part of furniture, such as leg of a chair or a table, a wooden plank, or another structure arranged to mechanically support the panel 100, in particular the second surface 135 of the panel 100.

Figure 6a shows a side view of a panel 100. The panel comprises a surface construction, wherein the surface construction comprises
- the surface layer 170, and
- a sub-surface layer 172.

The sub-surface layer 172 is arranged in between the fixing means 320 and the surface layer 170. Moreover, the surface construction comprises an adhesive layer 160 in between the sub-surface layer 172 and the surface layer 170. The sub-surface layer 172 may be attached to the surface of the preform, i.e. a layer 110 using an adhesive layer 162. Thus, the surface construction comprises an adhesive layer 162 in between the sub-surface layer 172 and a layer 110 of the panel.

In general, the surface construction comprises the surface layer 170. The surface construction may further comprise a number of sub-surface layers. The number of sub-surface layers may be e.g. zero, more than zero, one, more than one, two, more than two, three, more than three, four, or more than four. Moreover, in some embodiments, the number of sub-surface layers is at most three, at most five, or at most ten. In some other embodiments (e.g. Fig. 6d), the number of sub-surface layer may be larger.

In an embodiment, the sub-surface layer 172 comprises wood. At least one of the layers of the surface construction, in combination or separately, may be water-proof or humid-proof in the sense discussed above. Still further, the surface layer 170 and the adhesive layer 160 in combination, may form a transparent layer. In this way, the panel 100 looks like an ordinary plywood panel, but is also water-proof or humid-proof. Moreover, the panel can be fixed to another object using the fixing means 320.

Figure 6b shows a bottom view of the panel of Fig. 6a, as indicated in figure 6a with the cross sectional plane marks Vlb-Vlb. In this view, the second surface 135 of the panel 100 is visible. Moreover, the panel comprises a marking 175 indicative of the fixing means 320. The marking is located on the second surface 135 of the panel. However, similar marking could be located on the first surface 130 of the panel (cf. Fig. 2b). The marking 175 of Fig. 6b indicates the presence and location of the fixing means 320. Moreover, the panel comprises another marking 176. The other marking 176 is indicative of the size of the fixing means, in particular of the size of the mounting hole 340 of the fixing means.

Thus the marking 175, 176 may be indicative of at least one of
- the presence of the fixing means,
- the location of the fixing means,
- the size of the fixing means,
- the diameter of the mounting hole of the fixing means,
- the depth of the mounting hole of the fixing means,
- a maximum load that the fixing means can bear, e.g. a maximum pulling force,
- another maximum load that the fixing means can bear, e.g. a maximum pushing force, and
- waterproofness of the panel.

Figure 6c shows a cross sectional view of the panel of Fig. 6a, as indicated in figure 6a with the cross sectional plane marks Vlc-Vlc.

In an embodiment, the surface construction comprises at least two preforms, attached onto each other. In an embodiment, the surface construction comprises another preform comprising layers. In an embodiment, the at least one layer of the surface construction comprises wood. In an embodiment, the surface construction comprises another preform made of plywood. In addition to the another preform, the surface construction may further comprise the surface layer. However, the surface layer may be comprised by the another preform. The surface layer may be water-proof or humid proof, as discussed above.

Figure 6d shows an embodiment of a panel 100 comprising three preforms 600a, 600b, and 600c. The preforms 600c and 600b form the surface construction, which covers the fixing means 320. The fixing means is arranged at least partly in a first preform 600a. The preform 600b is attached to the preform 600a using adhesive 610a. The preform 600c is attached to the preform 600b using adhesive 610b. A part of the preform 600b is removed, whereby the panel 100 comprises a hole 605. Such a hole reduces the weight of the panel. In Fig. 6d, the fixing means 320 penetrates only the bottommost preform 600a. The fixing means 320 could penetrate also another preform, such as the preform 600b. The fixing means 320 could penetrate also all preforms except the topmost preform 600c. The topmost preform 600c comprises the surface layer 170. The fixing means 320 could penetrate also all preforms, and a separate surface layer 170 could be attached.

For example, a hole may be made in the first preform 600a. Thereafter the fixing means 320 may be mounted at least partly to the hole. Thereafter, a second preform 600b, 600c may be attached to the first preform such that the second preform forms at least part of the surface construction of the panel. The preform may be attached to each other using adhesive 610a, 610b. The adhesive 610a and/or 610b may comprise thermoplastic material. In addition, multiple preforms may be stacked onto each other to form the panel 100. Material may be removed, e.g. holes drilled or cut, to some of the preforms to ensure light weight and good strength of the panel 100. For example, the panel of Fig. 6d comprises three preforms, stacked onto each other. Material is removed from the central preform 600b only to decrease the weight of the panel 100. The outer topmost preform 600c that comprises the surface layer 170 is intact. Holes for the fixing means may be made to the outer preform 600a that comprises the second surface 135.

The number of preforms stacked onto each other to form the panel 100 may be e.g. one, two, three, four, or more than four. In a preferred embodiment, the panel comprises three preforms as depicted in Fig. 6d. The preforms 600a, 600b, and 600c may have equal thickness. The thickness of each preform may be e.g. 10 mm, 12 mm, or 15 mm. E.g. The panel 100 may comprise two preforms both having the thickness 15 mm. E.g. the panel 100 may comprise three preforms each having the thickness 10 mm or 12 mm. The preforms may have different thicknesses. In an embodiment, the thickness of the bottommost preform 600a is 5 mm, the thickness of the topmost 600c preform is 5 mm, and the thickness of the preform 600b in between the bottommost preform 600a and the topmost 600c preform is 20 mm. In this embodiment, the weight reduction achieved by the holes 605 is enhanced. In some embodiments, the thickness of a preform 600 in between the bottommost preform and the topmost preform is greater than the thickness of the bottommost preform. In some of these or other embodiments, the thickness of a preform 600 in between the bottommost preform and the topmost preform is greater than the thickness of the topmost preform. A preform may comprise a layer comprising at least one of: wood, fibrous material, metal (e.g. aluminum), polymer (e.g. an elastomer such as rubber) and cork. In between preforms, a layer comprising at least one of wood, fibrous material, metal (e.g. aluminum), polymer (e.g. an elastomer such as rubber) and cork, may be attached. The total thickness of the panel 100 may be e.g. in the range 20 mm to 40 mm.

The height of the fixing means 320 is preferably selected such that the space 222 (cf. Fig. 2c) is left in between the panel 100 and a support 210. In such an embodiment, the panel 100 comprises a hole (e.g. the hole 310) on the second surface 135 at the location of the fixing means 320. As for the height of the fixing means 320, the height of the fixing means may be e.g. at least 100 µm less than the thickness of the bottommost preform 600a. In another embodiment, wherein the fixing means 320 penetrates preforms (e.g. 600a and 600b), the height of the fixing means 320 may be e.g. at least 100 µm less than the total thickness of the preforms (e.g. 600a and 600b) that the fixing means 320 penetrate. Preferably the topmost preform 600c is solid (i.e. undamaged or intact). As for the depth of the hole 310 on the second surface 135, the depth of the hole 310 may be e.g. at least 100 µm, wherein the fixing means 320 is arranged at the bottom of the hole 310.

As indicated in Figs. 1 a to 6c, the panel 100 may be planar or essentially planar. An essentially planar panel 100 may be made e.g. using an essentially planar preform 600. A planar preform 600 or a planar panel 100 has an infinite radius of curvature. An essentially planar preform 600 or a planar essentially panel 100 has radius of curvature that is at least 5 m.

However, the panel may 100 ma have a radius of curvature of less than 5 m, whereby the panel is not even essentially planar, i.e. the panel is curvilinear. Such a curvilinear panel may be made e.g. by using a curvilinear preform.

A panel, either at least essentially planar or curvilinear, may be made by a method for manufacturing a panel. An embodiment of the method comprises
- arranging available a preform 600 for the panel, the preform 600 comprising
   - at least two layers 110 and
   - adhesive material 120 in between the two layers 110, whereby the preform comprises
   - a first surface 630 and a second surface 635, wherein
   - at least one of the layers 110 comprise wood,
- machining a hole 310, 312 (e.g. a through hole 310, cf. Fig. 7a) for a fixing means 320 into the preform 600 for the panel, such that the hole 310, 312 opens at least on the first surface 630 of the preform,
- arranging a fixing means 320 at least partly into the hole 310, 312, and
- covering at least the first surface 630 of the preform 600 for the panel with a surface layer 170, whereby the fixing means 320 becomes covered with the surface layer 170. Referring to Fig. 7a, the embodiment comprises arranging a surface construction to the preform such that the fixing means is covered with the surface construction.

In an embodiment, a part of the preform forms the surface construction. An embodiment for manufacturing a panel comprises
- arranging available a preform 600 for the panel, the preform 600 comprising
   - at least two layers 110 and
   - adhesive material 120 in between the two layers 110, whereby the preform comprises
   - a first surface 630 and a second surface 635, wherein
   - at least one of the layers 110 comprise wood,
- machining a hole 310, 312 (i.e. a pit 312, cf. Fig. 7d) for a fixing means 320 into the preform 600 for the panel, and
- arranging a fixing means 320 at least partly into the hole 310, 312.

The embodiment comprises machining the mounting hole such that a part of the preform forms a surface construction, such that the fixing means is covered with the surface construction. Referring to Fig. 7d, the surface construction comprises the surface layer 170 and the first surface 130. As the hole is a pit-type hole, the remaining preform may serve as the surface construction or as a part of the surface construction. The surface of the remaining preform may be coated for water-proofness, as discussed above.

Preferably the hole 310, 312 is a through-hole 310, whereby the method comprises machining a hole 310, 312 for a fixing means 320 into the preform 600 for the panel, such that the hole 310, 312 opens on the first surface 630 of the preform and the second surface 635 of the preform.

The preform 600 may be e.g. a plywood board. Such a preform 600 for the panel consists of wooden layers and at least one adhesive layer. In an embodiment, a wooden layer of the preform for the panel has been made by rotary cutting. In an embodiment, all wooden layers of the preform 600 for the panel has been made by rotary cutting.

In an embodiment, the method comprises attaching the surface layer to the preform for the panel using adhesive.

A curvilinear panel 100 may be made using a planar preform 600 and from pressing. For form pressing, the adhesive 120 layers of the preform 600 comprise thermoplastic material. The thermoplastic material 120 allows for sliding of the layers 110 with respect to each other e.g. when the temperature of the thermoplastic material 120 is above the melting point of the thermoplastic material. Therefore, such a layered preform 600 is much more flexible than a uniform board of a material, especially above the melting point of the thermoplastic material 120. The material of the layers 110 of the preform 600 have a higher melting point or softening point than the thermoplastic material 120 (cf. Figs. 2a and 2b).

It is noted that a curvilinear preform may be made from a planar preform by form pressing. Thereafter, the curvilinear panel may be made using the curvilinear preform.

After cooling down the panel 100 or the preform 600, the thermoplastic material hardens, and the object re-gains its rigidity. Alternatively, some thermoplastic materials start to cross-link in elevated temperature, e.g. during form pressing, whereby the thermoplastic material may become at least partly cross-linked thermoset material during form pressing. In this case cooling is not required for the form pressed preform or panel. At least partly thermoset resin (at least partly cross-linked resin) is an example of this kind of material. Moreover, only partly cross-linked resin is another example of this kind of material

The thermoplastic material 120 may comprise at least one of polyolefin, lignin, polyvinyl alcohol, polyethylene, polypropylene, polyester resin, phenol resin, epoxy resin, urea-formaldehyde resin, melamine resin, acrylics and polycarbonates. It is noted that e.g. polyethylene, polypropylene, and copolymers comprising ethylenes and propylenes are polyolefins. Some of these materials may be processed, e.g. in a high temperature, by cross-linking, to form at least partially thermoset material. These observation apply also to other layers that may comprise thermoplastic material, e.g. the adhesive layers 160, 161 and 162 (Fig. 8c).

Materials that are in thermoplastic form before and after form pressing may include polyolefin, lignin, polyethylene, and copolymers thereof. In an embodiment, the thermoplastic material is thermoplastic also after form pressing.

Materials that are in thermoplastic form before form pressing, and in at least partly thermoset form after form pressing may include phenol resin, epoxy resin, polyester resin, urea-formaldehyde resin, and melamine resin.

Figures 7a to 7c show the process of form pressing the preform 600 comprising a hole 310, 312 and a fixing means 320 in the hole. In addition, a surface layer 170 is attached to the preform 600 during form pressing, whereby a panel 100 is made in the process.

Figure 7a shows, in a side view, a preform 600 having layers 110 and thermoplastic material 120. The preform 600 is a planar preform. However, a preform 600 could also be curvilinear before form pressing. At least one hole 310, 312 for the fixing means 320 is machined for the fixing means 320. The hole 310, 312 is machined from the first surface 630. The hole is machined towards to second surface 635. The hole may be e.g. drilled. A fixing means 320 is arranged at least partly into the hole 310, 312. In addition, Fig. 7a shows an adhesive layer 160 and a surface layer 170.

Figure 7b shows form pressing the preform 600 of Fig. 7a. The preform 600 is heated or has been heated to a temperature, in which the thermoplastic material 120 is above its melting point.

Materials that are in thermoplastic form before and after form pressing may have a melting point of e.g. from 80 °C to 300 °C. Materials that are in thermoplastic form before form pressing, and in at least partly thermoset form after form pressing may have a melting point from -10 °C to 60 °C (before form pressing). Above the melting point, e.g. above 70 °C, the cross-linking may start and accelerate, and the material may be transformed to an at least partly thermoset material.

The preform 600 is form pressed the a curvilinear preform 600 or a curvilinear panel 100. In Fig. 7b form pressing results in a panel 100, since the surface layer 170 is attached during form pressing. The form pressing may be performed in a device for form pressing. The device for form pressing comprises an at least partially concave surface 466. The at least partially concave surface 466 may be arranged on a first body 465. The device further comprises an at least partially convex surface 456. The least partially convex surface 456 may be arranged on a second body 455. The shape of the at least partially concave surface 466 may be adapted to the shape of the at least partially convex surface 456. The preform 600 is form pressed in between two surfaces 456, 466. The device comprises means for pressing the surface 456 towards the surface 466.

At least one of the first body 455 and the second body 465 of the device may comprise elastic material on the convex or the concave part of the surface. The elastic material is arranged to deform during form pressing. Therefore, the shape of the surface is arranged to adapt to the shape of the preform 600. Preferably the surface that is arranged to be in contact with a surface layer 170 during form pressing (Fig. 7b, surface 466) comprises elastic material.

Another embodiment of the device for form pressing comprises a flexible vessel such as a fluid-proof bag. The vessel may be filled with fluid such as air, steam, and/or water. The wall of the flexible vessel may form the surface 456 or the surface 466. The vessel may thus be used as a heating element, arranged to heat a preform or an intermediate product. E.g. a hot fluid, such as steam, may be arranged to flow through the vessel or circulate in the vessel. Moreover, the vessel may - in addition or alternatively - be used as a cooling element, arranged to cool a preform or a panel. E.g. a cold fluid, such as air or water, may be arranged to flow through the vessel or circulate in the vessel.

In case the preform 600 comprises thermoplastic material (120, 160, 161, 162) that is in thermoplastic form before and after form pressing, the preform 600 may be form pressed in temperature that is relatively high. The preform 600 may have this temperature before form pressing, or the temperature may be increased during form pressing. The relatively high temperature refers to a temperature above the melting point of the thermoplastic material. The relatively high temperature may be e.g. 80 °C, 100 °C, 110 °C, 120 °C, 130 °C, 140 °C, 160 °C, 200 °C, 250 °C, or 300 °C. In an embodiment, the relatively high temperature is from 110 °C to 140 °C. In this way, the thermoplastic material is not rigid before and/or during from pressing.

During form pressing, or after form pressing, the product may be cooled down to a temperature below the melting point of the thermoplastic material. In this way, the thermoplastic material 120, 160, 161, 162 is rigid after form pressing. The temperature at the end of form pressing may be e.g. at least 10 °C, preferably at least 20 °C and more preferably at least 50 °C lower than the temperature of form pressing. The temperature at the end of form pressing may be e.g. at most 60 °C, at most 40 °C, or at most 30 °C.

In case the preform 100 comprises thermoplastic materials that is in thermoplastic form before form pressing, but in at least partly thermoset form after form pressing, the temperature during form pressing may be an intermediate temperature. The intermediate temperature refers to a temperature above the melting point of the thermoplastic material. In this way, the thermoplastic material is not rigid during from pressing. The intermediate temperature may be e.g. 40 °C, 50 °C, 60 °C, or 70 °C. During form pressing, the product may be further heated to start the cross-linking process of the thermoplastic material. In this way, the thermoplastic material transforms to at least partly thermoset material, which is rigid after form pressing.

Referring to Figs. 4a1 to 4c1 and 7b, the height h_{f} of the fixing means 320 is preferably less than the thickness hp of the panel (cf. also Figs 3a and 3b). In this way, the fixing means 320 does not contact the form pressing device (e.g. the bodies 455 and 465) during form pressing. Thus the form pressing device is protected from the fixing means 320. Preferably, the height of the fixing means is at most 95 % of the thickness of the panel. In some of these embodiments, the height of the fixing means is at most 80 % of the thickness of the panel.

As discussed, in an embodiment, the adhesive 120 of the preform 600 or the panel 100 comprises thermoplastic material as the adhesive material 120. Preferably, the adhesive 160 between the surface layer 170 and the preform 600 (cf. Figs. 7a to 7c) also comprises thermoplastic material. Thus, the surface layer 170 can be attached to the preform 600 during form pressing. The other adhesive layers 161, 162 may also comprise thermoplastic material.

Figure 7c shows the form pressed, curvilinear, panel 100. The panel comprises a fixing means 320a that is covered from the first side 130 by the surface layer 170, but is open from the second side of the panel 135. The panel further comprises a fixing means 320b that is covered from the first side 130 by the surface layer 170 and further covered from the second side 135 by a layer 110 of the panel. The hole 312 (Fig. 7a) may also be partly located in all of the layers 110, whereby a fixing means could be covered from the second side 135 by a (thin) part of a layer 110 of the panel.

Figures 8a to 8e describe a method for manufacturing a panel. Fig 8a shows arranging available the preform 600, as discussed. Fig 8b shows machining a hole 310 (in particular a through hole) to the preform 600, as discussed.

Figure 8c shows removing material from the preform. Material may be removed before form pressing to manufacture a panel having a non-uniform thickness. Such panels may be usable in pieces of furniture. In particular, in

Fig. 8c material has been removed from the lower right part of the preform 600. The part is indicated with reference number 620 in Fig. 8b. The preform 600 of Fig. 8c comprises two holes 310a and 310b. It is noted, that in the panel 100 both the holes are oriented essentially perpendicularly to the surface layer 170. However, the holes are not necessarily perpendicular to the opposing surface of the panel 100. The holes 310 could be oriented essentially perpendicularly to the second surface 135 (Fig. 8e) of the panel 100.

Figure 8c shows
- the preform 600 comprising
   o at least two layers 110,
   o adhesive 120 between the layers 110,
   o a hole (310a or 310b),
- the fixing means 320 arranged in the hole 310 of the preform 600,
- the surface layer 170, which covers the fixing means 320, on the first side of the panel,
- adhesive layer 160 for attaching the surface layer 170 to the panel 100,
- a sub-surface layer 172,
- an adhesive layer 162 for attaching the sub-surface layer 172 to the panel 100,
- a second surface layer 171 on the second side of the panel 100, and
- an adhesive layer 161 for attaching the second surface layer 171 to the panel 100.

For form pressing, the adhesive 120 comprises thermoplastic adhesive. In the panel, the second side of the panel is opposite to the first side of the panel.

Figure 8d shows form pressing of the structure of Fig. 8c. The adhesive layers 160, 161, 162 may comprise thermoplastic material, whereby the surface layers 170, 171 and the sub-surface layer 172 are attached to the board during form pressing.

Figure 8e shows the final panel 100 after form pressing.

As discussed, the panel 100 (or the preform 600) comprises at least one layer that comprises wood. Moreover, at least one of
- the surface layer 170,
- the sub-surface layer 172, and
- the second surface layer 171
may comprise wood. For mechanical rigidity, the thickness of a layer that comprises wood may be e.g. from 0.2 mm to 5 mm. Such a layer may be any one of the above layers. Layers that comprise wood may be made by rotary cutting. Such layers have an attracting visual appearance and are mechanically rigid. Other means for forming such layers include flat slicing, quarter slicing, half-round slicing, and rift cutting.

In an embodiment, the panel consists of materials that are non-porous. Such materials are strong and they do not wet as easily as porous materials. In addition to porous materials, sparse or non-dense materials may have the same unsatisfactory properties as porous materials. In an embodiment, the panel 100 comprises only dense materials. Such a panel has a density, wherein the density of the panel is at least 500 kg/m³

Figures 9a to 9e (and Fig. 1 c) show some uses of the panel. In Fig. 1c, the panel 100 (i.e. 100a) is used as a floor element of a vehicle. In Fig. 9a a panel 100a is used as a floor element. Another panel 100b is used as a wall element. The floor element and/or the wall element may be used as constructional elements in a vehicle. Moreover, the floor element and/or the wall element may be used as constructional elements in a building. Figure 9b shows the panel 100b (i.e. the wall element) in more detail. The panel 100b comprises the surface layer 170 and the second surface layer 171. Moreover, a second fixing means 220 has been attached to the fixing means 320b to attach the panel 100b to a frame, such as a frame of a building or a frame of a vehicle. Still further, a third fixing means 225 has been attached to the fixing means 320a. The third fixing means 225 can be used e.g. to secure a load 160 (Fig. 9a) to a vehicle. Securing may be made with a lashing belt 250. The panel thus comprises
- a fixing means 320a for fixing the panel to an object from the second side of the panel and
- a fixing means 320b for fixing the panel to an object from the first side of the panel.
Both these fixing means may be concealed e.g. covered, on both sides of the panel. The location of the fixing means may be marked on the panel, or the location can be otherwise found, as discussed above. The surface layer 170 or the second surface layer 171 may be opened for fixing an object to the panel.

The vehicle of Fig. 1 c comprises a panel according to and embodiment of the invention. In the vehicle, the thickness of the panel is preferably at least 12 mm. In the vehicle, preferably the surface construction (e.g. at least one of the sub-surface layer 172, the surface layer 170, the adhesive layer, 162 and the adhesive layer 160, separately or in combination) is waterproof or humid proof, as discussed above. In a preferred embodiment, in a vehicle, for increased strength, the panel comprises a sub-surface layer 172 that comprises wood. The sub-surface layer 172 may comprise e.g. a wooden veneer. As depicted in Fig. 1c, the vehicle 200 comprises a body 210 such as a frame. A floor is arranged on the frame 210. The floor comprises the panel 100. In addition, the panel 100 is attached to the body 210 of the vehicle 200 using the fixing means 320 of the panel 100. To further improve the attachment between the panel 100 and the body 210 of the vehicle, in a vehicle the panel 100 is further attached to the body 210 of the vehicle 200 using adhesive.

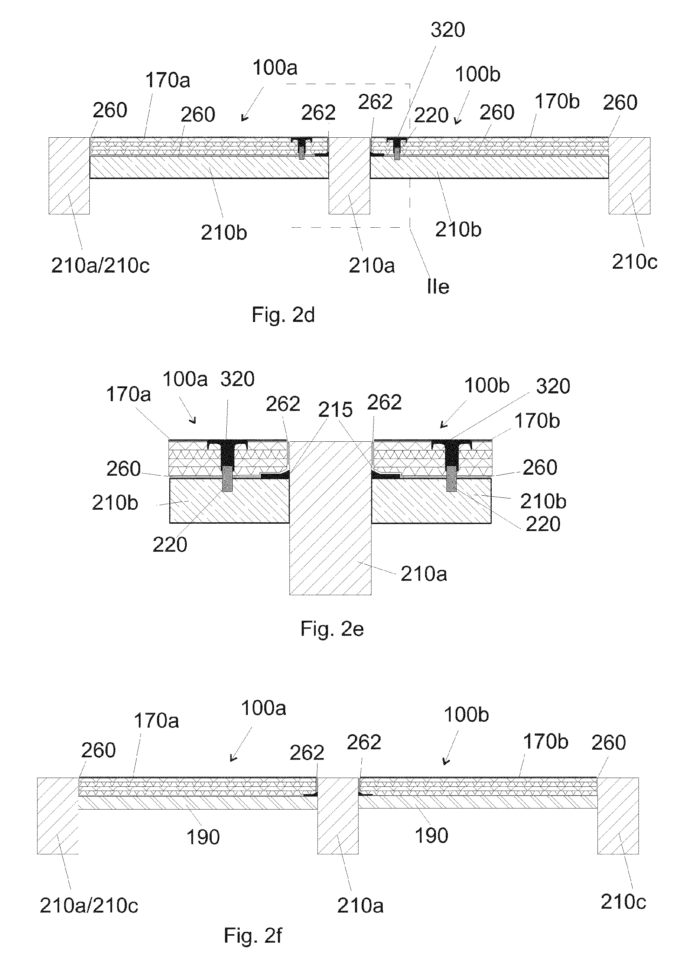

Referring to Fig. 2d, the frame of a vehicle may comprise at least one main beam 210a. Some typical frames comprise two main beams. The main beam may be directed in the direction in which the vehicle is arranged to run. The main beam 210a may therefore be a longitudinal beam. The frame may further comprise transverse beams 210b. The transverse beams are arranged transversely to the main beam 210a. The transverse beams are located a distance apart from each other in the longitudinal direction. Still further, the frame may comprise side beams 210c arranged parallel to the main beams 210a. In Fig. 2d, one side beam 210c (on the right hand side) is shown, and one main beam 210a (in the middle) is shown. The reference 210a/210c (on the left) refer either to a second side beam 210c, or a second main beam 210a. In case the frame comprises a second main beam 210a, the structure extends towards a second side beam 210c (to the left, in this case not depicted in the figure).

As depicted in the Figure, a panel 100 may be attached to at least one of
- the transverse beam 210b,
- the main beam 210a, and
- the side beam 210c,
using adhesive 260 or sealant 262. In addition to the adhesive 260 or the sealant 262, the panel 100 is attached to the frame using the fixing means 320. The panel may be e.g. attached to the transverse beams with adhesive 260 and the fixing means 320, and the seams between the panel and the main beam or side beams may be filled with a sealant 262. Adhesive 260 may be used instead of sealant 262 to seal the seams. Therefore, adhesive 260 and optionally sealant 262 may be used to attach the panels 100a, 100b to at least two of
- the transverse beam 210b,
- the main beam 210a, and
- the side beam 210c.
Preferably, in this case, adhesive 260 and optionally sealant 262 is used to attach the panels 100a, 100b to at least the transverse beam 210b.

In is further noted that the second side 135 of the panel 100 may be attached to a beam (e.g. to the transverse beam 210b, as shown in the figure, to a main beam 210a, or to a side beam 210c). However, in addition to the surface, a side of the panel may be attached to a beam of the frame, wherein the side is perpendicular to the second surface 135. The side may be attached, using adhesive 260, to at least one of
- the main beam 210a, and
- the side beam 210c.

The adhesive 260 in between the panel 100 and the frame (210a, 210b, 210c) together with the panel itself, may provide sufficient rigidity to the flooring of the vehicle even if the panels are not stiffened by additional stiffening structures (compare to a stiffening structure 190 of Fig. 2f). In such a case the panel does not comprise such additional stiffening structures. In such a case the whole panel 100 is located on the frame. I.e. a part of the panel (i.e. a flooring element) is not located beneath a beam (210a, 210b, 210c). In this case the thickness of the panel may be e.g. at least 15 mm or at least 17 mm, or at least 20 mm. Moreover, in an embodiment, a part of at least one layer 110 of the panel 100 is arranged in between the support (210a, 210b, 210c) and the fixing means 320 in a direction, wherein the direction is parallel to the thickness of the panel 100. In the embodiment, the fixing means 320 may have the shape of the fixing means of Fig. 4a1, as discussed above.

In a preferred embodiment, the panel of the vehicle comprises a surface construction that is part of the preform 600, wherein a hole 312 has been machined to the preform, and the fixing means 320 is arranged into the hole 312, as depicted in Fig. 7d. Moreover, the thickness of the panel is preferably greater than the height of the fixing means. In this way, the fixing means 320 may be arranged between the first surface 130, and a planar extension of the second surface 135, wherein the planar extension is the plane covering the opening of the mounting hole 312 (cf. e.g. Fig. 7d).

Figure 2e shows in detail the part Ile of Fig. 2d. The shape of a side of the panel may be adapted to the shape of the frame (210a, 210b, 210c) of the vehicle. In particular, the beams may be welded to each other, in which case a joint 215 may slightly protrude from the frame. The shape of the panel may be adapted to the joint 215 as well, as depicted in Fig. 2e.

Referring to Figs. 2d and 2e, the top of the main beam 210a may be arranged - in the vertical direction - in the same level as the first surface 130 of the panel 100a or 100b. In this way, the panels 100a, 100b and the main beam 210a (or main beams) form an even surface for the floor or the vehicle. Moreover, as the main beam(s) 210a form a part of the floor, the space for cargo within the vehicle remains high. I.e. as the panels 100 are not fitted on the main beams, the space for cargo is not decreased by height of the flooring panel.

Referring to Fig. 2f, the panel 100 may further comprise a stiffening structure 190. Figure 2f shows, in a side view, two panels fixed to a frame of a vehicle. However, compared to Fig. 2d, the structure is shown on a plane, wherein the plane runs between two transverse beams 210b (cf. Fig. 2d and 2e). In between the transverse beams 210b, a space is left, which space can be used for the stiffening structure 190. The stiffening structure may be located, e.g. attached, beneath the panel, e.g. on the second surface 135 of the panel 100.

The stiffening structure 190 may comprise sheet-like parts, having their planes in the vertical direction. The sheet like parts are located within a distance from each other. The sheet-like parts may be arranged in an angle with respect to each other. The stiffening structure may be e.g. a honeycomb structure. In this way, the reinforced (i.e. stiffened) panel further comprises the stiffening structure 190. Such a panel is stiff and still light (in weight), since such a honeycomb structure has a low density. In addition to a honeycomb structure, other lattice-type structures are possible. The lattice-type structure means a structure that forms a lattice or a network when viewed from the top. The honeycomb structure forms a hexagonal lattice. Other lattices such as a triangular or a square are equally possible. Still further, a random network structure, such as the boundaries of a Voronoi diagram or a Delaunay triangulation, may be used as the stiffening structure 190.

The panel 100 may be fixed to a supporting structure 210 as discussed above, i.e. such that the panel 100 is directly fixed to the supporting structure 210 with the fixing means 320 and the second fixing means 220 (Fig. 2c). The stiffening structure 190 may be attached to the panel as indicated in Figs. 2d and 2f. In addition, the panel 100 may comprise a layer having the stiffening structure. In this case, the panel would be relatively thick. Moreover, at least one of the fixing means 320 and the second fixing means 220 (Fig. 2c) would penetrate through the stiffening structure 190.

Figures 9c and 9d show pieces of furniture comprising a panel 100 according to an embodiment of the invention. Figure 9c shows a seat 510, such as a chair or a sofa. Figure 9d shows a lighting device 320 such as a lamp. In pieces of furniture, the thickness of the panel 100 is preferably at least 4 mm.

The seat 510 comprises a panel 100. For example, the stands of the seat 510 may be fixed to the rest of the seat using the fixing means 320 of the panel 100. The fixing means 320 is covered by the surface layer 170 as discussed. Thereby the fixing means 320 is not visible when the seat is arranged for use.

The lighting device 520 comprises a panel 100. For example, lightning device may be mounted to a ceiling 590 using the fixing means 320 of the panel 100. In particular a base 525 of the lighting device 520 may comprise a panel 100. From the base 525, a lamp 527 may be suspended. The lamp 527 may be suspended by means known as such. As the lighting device 520 is fixed to the ceiling 590, the fixing means 320 is covered by the surface layer 170, whereby the fixing means 320 is not visible when the lighting device is mounted for use.

In pieces of furniture, the surface layer 170 may comprise wood. In this way the panel 100 may appear as a traditional panel, and therefore may be visually attractive. Alternatively, the surface layer 170 may be a transparent protective layer (e.g. varnish) and the panel may comprise a sub-surface layer 172. The sub-surface layer 172 may comprise wood. In this way the visual appearance of the piece of furniture may be even better. Moreover, the protective coating (e.g. lacquer or varnish) may increase the wear resistance of the piece of furniture.

Figure 9e shows another preferred used of the panel 100. Figure 9e shows four panels: 100c to 100f. The panels 100c and 100d are curvilinear, and the panels 100e and 100f are essentially planar. The panels 100c to 100f are used in concrete forming. A structure for concrete forming comprises these panels, and may further comprise support structures 510. A support structure 510 may support the panel from the second surface of the panel. Such a structure may be filled with concrete 550. In particular, the structure may be filled with wet concrete. The wet concrete is allowed to dry to form solid concrete. In the use for concrete forming, preferably the surface construction (e.g. at least one of the sub-surface layer 172, the surface layer 170, the adhesive layer, 162 and the adhesive layer 160, separately or in combination) is waterproof or humid proof, as discussed above. The water-proof surface construction (the surface layer 170 in particular) may face the concrete 550. The thickness of the panel for concrete forming may be at least 4 mm, at least 5 mm, at least 8 mm, or at least 10 mm.

The surface layer 170 on the first surface of the panel 100 may face the concrete 550. The surface layer may be even, i.e. the roughness of the surface layer may be less than the roughness of a plywood panel. In this way, the concrete formed using the panel 100 having the surface layer 170 and the fixing means 320 may have a more even surface than concrete formed using other panels. This may improve the visual appearance of the formed object.

The in the lightning device 525 of Fig. 9d, the mass of the device causes a pulling force to the fixing means 320. Therefore, the fixing means 320 preferably has
- a first cross sectional area A₁ facing the first surface of the panel, and
- a second cross sectional area A₂ facing the second surface of the panel, wherein
- the second cross sectional area A₂ is smaller than the first cross sectional area A₁.
This was discussed already in connection with Fig. 3a.

However, in the seat of Fig. 9c, and in the concrete forming of Fig. 9e, the forces acting on the fixing means 320 are typically pushing forces. In the seat 510 the force is the gravitational force of the sitting person, and in concrete forming, the hydrostatic pressure of the wet concrete pushes the panel 100 that is supported via the fixing means 320. Note that the surface layer 170 is preferably arranged towards the concrete 550. In these cases the fixing means may be arranged in the panel specifically for the pushing forces. Such a panel is shown in Fig. 9f. In the panel 100, the fixing means 320 is attached to the panel with the elastic material 330, e.g. adhesive. The support 510 transmits the pushing force 240 to the fixing means. The fixing means 320 of Fig. 9f preferably has
- a first cross sectional area A₁ facing the first surface of the panel, and
- a second cross sectional area A₂ facing the second surface of the panel, wherein
- the first cross sectional area A₁ is smaller than the second cross sectional area A₂.
The ratio of these areas (A₂:A₁) is preferably at least 1.5; preferably at least 2; and preferably at least 3. These values were given also in connection with Fig. 3a. In these embodiments the ratio of the larger cross sectional area, max(A₁,A₂), to the smaller cross sectional area, min(A₁,A₂), - max(A₁,A₂)/min(A₁,A₂) - is at least 1.5. The ratio max(A₁,A₂)/min(A₁,A₂) is preferably at least 2. The ratio max(A₁,A₂)/min(A₁,A₂) is more preferably at least 3.

In addition or alternatively to the previous examples, the panel 100 comprising the fixing means 320 may be used as at least one of
- a ceiling element,
- a cladding panel on an outer wall,
- a cladding panel on an inner wall,
- a sound insulating panel, e.g. on a floor,
- an acoustic panel, and
- a thermal insulation panel.

A sound insulating panel may comprise a layer of suitable elastomer to damp vibrations. An acoustic panel may be arranged to reflect sound, whereby the surface layer may be essentially hard. In addition, the acoustic mane may be shaped, e.g. to a curvilinear shape, in order to reflect the sound waves towards a certain area, such as an auditorium. Alternatively, an acoustic panel may be arranged to absorb sound. In this case the panel may comprise porous material, such a porous polymer, or mineral wool. The porous material absorbs sound and decreases echoes is the space, wherein such panels are arranged.

An embodiment of the panel 100 may be used as a traffic sign (i.e. a road sign). In the embodiment, the first surface 130 comprises reflective material, The first surface 130 further comprises markings to provide information to read users. The reflective material may have a retroreflectivity that corresponds to normal traffic signs. The retroreflectivity may depend on color. The markings may be shown with the color. The retroreflectivity of the reflective material may be at least 7. The retroreflectivity of the reflective material may be at least 7 for at least one of red, blue, and green. The retroreflectivity of the reflective material may be at least 35 for white. The markings may comprise a white part and another part comprising one of red, green, and blue color. The ratio of the retroreflectivity for white to the retroreflectivity of red, green, or blue may be e.g. at least three.

The panel for the traffic sign further comprises the fixing means 320, covered by a surface construction comprising the reflective material. The surface construction may further comprise a wooden layer and phenol in between the wooden layer and the reflective layer. The traffic sign (i.e. the panel 100) may be fixed to a support 210 using the fixing means 320. The support 210 may be a metallic support. The fixing means 320 may be arranged within a distance from the metallic support. The traffic sign (i.e. the panel 100) may be fixed to a support 210 using the fixing means 320 and another fixing means 220. In this way, a nail or a screw needs not to be arranged through the reflective material. As the reflective surface remains solid, water does not penetrate through holes, which could be made if nails or crews were used. In this way, the service life of the traffic sign is much longer than in a comparative case, wherein a screw is arranged to penetrate the reflective surface.

The following examples summarize some features of the embodiments:
1. A panel comprising
   - a first surface and a second surface,
   - a surface layer, wherein the surface layer comprises the first surface,
   - at least two layers, wherein at least one of the at least two layers comprise wood,
   - adhesive material in between the at least two layers, and
   - a fixing means, wherein
   - the fixing means is covered on at least a first side of the panel with (i) the surface layer and (ii) optionally another surface layer,
      whereby the fixing means is concealed be the surface layer.
2. The panel of example 1, wherein
   - the fixing means is arranged at least partly in the panel,
      whereby at least one of the at least two layers is arranged to mechanically support the fixing means.
3. The panel of example 1 or 2, wherein
   - the surface layer is essentially flat at the location of the fixing means,
      whereby the panel may be visually attractive.
4. The panel of any of the example 1 to 3, wherein
   - the panel comprises a surface construction, wherein the surface construction comprises the surface layer, and
   - the surface construction is water-proof or humid-proof,
      to protect the at least two layers from moisture.
5. The panel of any of the examples 1 to 5, wherein the fixing means limits
   - a mounting means,
      whereby a second fixing means is arranged to be fixed to the fixing means of the panel.
6. The panel of any of the example 5, wherein
   - the fixing means comprises a shape for mechanically locking an object to the mounting hole.
7. The panel of the example 6, wherein the
   - the mounting hole has circular cross section and
   - the fixing means comprises threads arranged towards the mounting hole.
8. The panel of the example 7, wherein the
   - diameter of the a circular cross section is from 4 to 10 mm.
9. The panel of any of the examples 1 to 8, wherein the fixing mean is
   - attachable to an object and
   - detachable from the object.
10. The panel of any of the examples 1 to 9, wherein the fixing means has
   - a first cross sectional area facing the first surface of the panel, and
   - a second cross sectional area facing the second surface of the panel, wherein
   - (i) the second cross sectional area is smaller than the first cross sectional area or (ii) the first cross sectional area is smaller than the second cross sectional area.
11. The panel of example 10, wherein
   - the ratio of the larger cross sectional area to the smaller cross sectional are (max(A₁,A₂)/min(A₁,A₂)) is at least 1.5; preferable at least 2; and more preferably at least 3.
12. The panel of example 10 or 11, wherein
   - the second cross sectional area is smaller than the first cross sectional area.
13. The panel of any of the examples 10 to 12, wherein
   - the first cross sectional area is circular, having a first diameter
   - the second cross sectional area is circular, having a second diameter,
   - the first diameter is from 10 to 20 mm, and
   - the second diameter is from 5 to 10 mm.
14. The panel of example 1 to 13, wherein
   - at least part of at least one layer is located in between a part of the fixing means and another part of the fixing means.
15. The panel of any of the examples 1 to 14, wherein the fixing means comprises at least one of metal, polymer, composite, carbon fibres, and wood-polymer composite.
16. The panel of any of the examples 1 to 15, wherein the distance between the first surface and the second surface is at least 4 mm.
17. The panel of any of the examples 1 to 16, wherein
   - the fixing means protrudes from the second surface of the panel.
18. The panel of any of the examples 1 to 16, wherein
   - the fixing means has a height in the direction from the second surface to the first surface,
   - the panel has a thickness in the direction from the second surface to the first surface, and
   - the thickness of the panel is greater than the height of the fixing means.
19. The panel of the example 18, wherein
   - height of the fixing means is at least 50 % of the thickness of the panel; preferably the height of the fixing means is at least 70 %, 80 %, or 90 % of the thickness of the panel.
20. The panel of the example 19 or 19, wherein
   - height of the fixing means is at most 95 % of the thickness of the panel.
21. The panel of any of the examples 1 to 20, wherein
   - the adhesive material comprises thermoplastic material,
      whereby the panel may be form pressed to a form.
22. The panel of any of the examples 1 to 21, comprising
   - a second surface construction, wherein
   - the second surface construction comprises a second surface layer, and
   - the second surface layer comprises the second surface.
23. The panel of the example 22, wherein
   - the second surface construction is water-proof or humid-proof,
      to protect the at least two layers from moisture from the second surface.
24. The panel of any of the examples 1 to 23, wherein the panel is essentially planar.
25. The panel of any of the examples 1 to 23, wherein the first surface or the second surface has a radius of curvature, wherein the radius of curvature is less than 5 m.
26. The panel of any of the examples 1 to 25, comprising
   - elastic material in between the fixing means and a layer of the panel, wherein the elastic material is different from the material of the fixing means.
27. The panel of the example 26, wherein
   - the Young's modulus of the elastic material is at most 4 GPa.
28. The panel of the example 26 or 27, wherein
   - the elastic material in between the fixing means and a layer of the panel wherein the elastic material comprises thermally active material.
29. The panel of any of the examples 26 to 28, comprising
   - stiff material in between the elastic material and a layer of the panel, wherein the stiff material is different from the elastic material, and
   - the Young's modulus of the stiff material is greater than the Young's modulus of the elastic material.
30. The panel of example 29, wherein
   - the stiff material comprises at least one of metal, polymer (such as polyoxymethylene, POM), ceramics, and composite (such as fiber reinforced polymer composite).
31. The panel of any of the examples 1 to 30, wherein
   - the panel comprises a surface construction, wherein the surface construction comprises the surface layer, and
   - the surface construction comprises wood.
32. The panel of any of the examples 1 to 31, wherein
   - the surface layer comprises at least one of phenol, polyethylene, polyurethane, polypropylene, and copolymer of polyethylene and polypropylene.
33. The panel of any of the examples 1 to 32, comprising
   - at least one marking indicative of the fixing means, on the first or the second surface of the panel.
34. The panel of the example 33, wherein the marking is indicative of at least one of
   - the presence of the fixing means,
   - the location of the fixing means,
   - the size of the fixing means,
   - the diameter of the mounting hole of the fixing means,
   - the depth of the mounting hole of the fixing means,
   - maximum load that the fixing means can bear, e.g. pulling force,
   - another maximum load that the fixing means can bear, e.g. pushing force, and
   - waterproofness of the panel.
35. The panel of any of the examples 1 to 34, comprising
   - a surface construction, wherein the surface construction comprises the surface layer, and
   - the surface construction comprises a sub-surface layer, such that the sub-surface layer is arranged in between the fixing means and the surface layer.
36. The panel of the example 35, wherein
   - the sub-surface layer comprises wood.
37. The panel of any of the examples 1 to 36, wherein
   - the thickness of a layer that comprises wood is from 0.2 to 5 mm.
38. The panel of any of the examples 1 to 37, wherein
   - a layer that comprises wood is made by rotary cutting.
39. The panel of any of the examples 1 to 38, wherein
   - the fixing means is located on the boundary area of the panel.
40. The panel of any of the example 39, wherein
   - all the fixing means are located only on the boundary area of the panel.
41. The panel of any of the examples 1 to 40, wherein
   - the density of the panel is at least 500 kg/m³,
      whereby the panel is essentially non-porous, strong, and does not wet easily.
42. The panel of any of the examples 1 to 41, comprising
   - a stiffening structure.
43. A structure comprising
   - the panel of any of the examples 1 to 42 and
   - a support, wherein
   - a part of the panel is arranged in between the fixing means and the support. Optionally, the fixing means is located within a distance from the support.
44. The structure of the example 43, wherein
   - a part the panel is arranged in between the support and the fixing means in a direction, and
   - the direction is parallel to the thickness of the panel.
45. A structure comprising
   - the panel of any of the examples 1 to 42 and
   - a support, wherein
   - the fixing means is located within a distance from the support.
      Optionally, a part of the panel is arranged in between the fixing means and the support.
46. A vehicle comprising
   - a panel of any of the examples 1 to 42.
47. The vehicle of example 46, wherein
   - the thickness of the panel is at least 15 mm.
48. The vehicle of the example 46 or 47, wherein
   - the vehicle comprises a frame comprising a main beam and a transverse beam,
   - the vehicle comprises a floor,
   - the floor of the vehicle comprises the panel,
   - the panel is attached to a beam of the frame of the vehicle using the fixing means of the panel.
49. The vehicle of example 48, wherein
   - the thickness of the panel is selected such that the top of the main beam is arranged in the vertical direction in the same level as the first surface of the panel.
50. The vehicle of any of the examples 46 to 49, wherein
   - the panel is further attached to a beam of the frame of the vehicle using adhesive.
51. The vehicle of any of the examples 46 to 50, wherein
   - the panel is attached to the main beam using adhesive or sealant and
   - the panel is attached to a transverse beam using adhesive or the fixing means.
52. The vehicle of any of the examples 46 to 51, comprising a stiffening structure, wherein
   - the stiffening structure is attached to the second surface of the panel or
   - the panel comprises the stiffening structure.
53. A piece of furniture comprising
   - a panel of any of the examples 1 to 42.
54. The piece of furniture of example 53, wherein
   - the thickness of the panel is at least 4 mm.
55. The piece of furniture of example 53 or 54, wherein
   - the fixing means protrudes from the second surface of the panel.
56. The piece of furniture of and of the examples 53 to 55, wherein
   - the piece of furniture is a seat such as a chair or a sofa.
57. The piece of furniture of any of the examples 53 to 56, wherein
   - the piece of furniture is a lighting device.
58. Use the panel of any of the examples 1 to 42 in concrete forming.
59. The use of example 58, wherein the thickness of the panel is at least 4 mm.
60. The use of example 58 or 59, comprising
   - using a support to support the panel from the second surface of the panel.
61. The use of any of the examples 58 to 60, wherein the first surface of the panel faces the concrete.
62. A method for manufacturing a panel, the method comprising
   - arranging available a preform for the panel, the preform comprising at least two layers and adhesive material in between the two layers, wherein at least one of the layers comprise wood, whereby the preform comprises a first surface and a second surface,
   - machining a mounting hole for a fixing means into the preform for the panel,
   - arranging a fixing means at least partly into the mounting hole, and
   - (i) arranging a surface construction or (ii) machining the mounting hole such that a part of the preform forms a surface construction, such that
   - the surface construction comprises a first surface of the panel, and the fixing means is covered with the first surface of the panel.
63. The method of any of the examples 62 to 64, wherein
   - the mounting hole for a fixing means is machined such that the mounting hole for a fixing means penetrates through the preform, and
   - covering at least the first surface of the preform for the panel with the surface construction, whereby the fixing means becomes covered with the surface construction.
64. The method of example 62 or 63, wherein
   - the mounting hole for a fixing means is machined to the second surface of the panel such that the mounting hole for a fixing means does not penetrate through the preform, whereby a part of the preform forms a surface construction comprising the first surface of the panel, which
   - first surface covers the fixing means.
65. The method of any of the examples 62 to 64, wherein
   - the preform for the panel consists of wooden layers and at least one adhesive layer.
66. The method of any of the examples 62 to 65, wherein
   - a wooden layer of the preform for the panel has been made by rotary cutting.
67. The method of the example 66, wherein
   - the preform comprises plywood.
68. The method of any of the examples 62 to 67, comprising
   - attaching the surface layer to the preform for the panel using adhesive.
69. The method of any of the examples 62 to 68, wherein
   - the adhesive material of the panel comprises thermoplastic material.
70. The method of the example 69, comprising
   - form pressing the panel or the preform for the panel.
71. The method of the example 70, comprising
   - attaching the surface construction to the preform for the panel using thermoplastic adhesive, and
   - attaching the surface construction to the preform for the panel during the form pressing.
72. The method of any of the examples 62 to 71, comprising
   - covering the second surface of the preform for the panel with a second surface construction.
73. The method of any of the examples 62 to 72, wherein
   - the surface construction comprises a surface layer.
74. The method of any of the examples 62 to 73, wherein
   - the surface construction comprises another preform.

## Claims

1. A panel comprising
- a first surface and a second surface,
- a surface layer, wherein the surface layer comprises the first surface,
- at least two layers, wherein at least one of the at least two layers comprise wood,
- adhesive material in between the at least two layers, and
- a fixing means, wherein
- the fixing means is arranged at least partly in the panel such that
- the fixing means is covered on at least a first side of the panel with (i) the surface layer and (ii) optionally another surface layer,
whereby the fixing means is concealed be the surface layer.

2. The panel of claim 1, comprising
- a surface construction, wherein the surface construction comprises the surface layer, and
- the surface construction is water-proof or humid-proof,
to protect the at least two layers from moisture.

3. The panel of claim 1 or 2, wherein the fixing means has
- a first cross sectional area facing the first surface of the panel, and
- a second cross sectional area facing the second surface of the panel, wherein
- (i) the second cross sectional area is smaller than the first cross sectional area or (ii) the first cross sectional area is smaller than the second cross sectional area.

4. The panel of any of the claims 1 to 3, wherein
- the fixing means has a height in the direction from the second surface to the first surface,
- the panel has a thickness in the direction from the second surface to the first surface, and
- the thickness of the panel is greater than the height of the fixing means.

5. The panel of any of the claims 1 to 4, comprising
- a second surface construction, wherein
- the second surface construction comprises a second surface layer, and
- the second surface layer comprises the second surface.

6. The panel of any of the claims 1 to 5, comprising
- elastic material in between the fixing means and a layer of the panel, wherein the elastic material is different from the material of the fixing means.

7. The panel of the claim 6, comprising
- stiff material in between the elastic material and a layer of the panel, wherein the stiff material is different from the elastic material, and
- the Young's modulus of the stiff material is greater than the Young's modulus of the elastic material.

8. A vehicle comprising
- a panel of any of the claims 1 to 7.

9. The vehicle of the claim 8, wherein
- the vehicle comprises a frame comprising a main beam and a transverse beam,
- the vehicle comprises a floor,
- the floor of the vehicle comprises the panel, and
- the panel is attached to a beam of the frame of the vehicle using the fixing means of the panel, wherein
- the thickness of the panel is selected such that the top of the main beam is arranged in the vertical direction in the same level as the first surface of the panel.

10. The vehicle of the claim 8 or 9, wherein
- the vehicle comprises a frame comprising a main beam and a transverse beam,
- the panel is attached to the main beam using adhesive or sealant and
- the panel is attached to a transverse beam using adhesive or the fixing means.

11. A structure comprising
- the panel of any of the claims 1 to 7 and
- a support, wherein
- a part of the panel is arranged in between the fixing means and the support.

12. A structure comprising
- the panel of any of the claims 1 to 7 and
- a support, wherein
- the fixing means is located within a distance from the support.

13. A piece of furniture comprising
- a panel of any of the claims 1 to 7 or
- a structure of claim 11 or 12.

14. Use of the panel of any of the claims 1 to 7 in concrete forming.

15. A method for manufacturing a panel, the method comprising
- arranging available a preform for the panel, the preform comprising at least two layers and adhesive material in between the two layers, wherein at least one of the layers comprise wood, whereby the preform comprises a first surface and a second surface,
- machining a mounting hole for a fixing means into the preform for the panel,
- arranging a fixing means at least partly into the mounting hole, and
- (i) arranging a surface construction or (ii) machining the mounting hole such that a part of the preform forms a surface construction; such that
- the fixing means is covered with the surface construction.
